Europäisches Patentamt

European Patent Office

Office européen des brevets

(19)

(11)  **EP 1 361 231 A1**

(12)  **EUROPEAN PATENT APPLICATION**
published in accordance with Art. 158(3) EPC

(43) Date of publication:
**12.11.2003   Bulletin 2003/46**

(51) Int Cl.7: **C08F 8/22**

(21) Application number: **01273190.7**

(86) International application number:
**PCT/JP01/11249**

(22) Date of filing: **21.12.2001**

(87) International publication number:
**WO 02/055565 (18.07.2002 Gazette 2002/29)**

(84) Designated Contracting States:
**FR NL**

(30) Priority: **15.01.2001   JP 2001006479
12.04.2001   JP 2001114432
29.10.2001   JP 2001331438**

(71) Applicant: **KANEKA CORPORATION
Osaka-shi, Osaka 530-8288 (JP)**

(72) Inventors:
  • **UESHIMA, Kenji
    Kobe-shi, Hyogo 657-0855 (JP)**
  • **WACHI, Shun
    Takasago-shi, Hyogo 676-0025 (JP)**
  • **SHIOTA, Hiroaki
    Nishinomiya-shi, Hyogo 662-0855 (JP)**

(74) Representative: **VOSSIUS & PARTNER
Siebertstrasse 4
81675 München (DE)**

(54)   **METHOD AND APPARATUS FOR PRODUCING CHLORINATED VINYL CHLORIDE RESIN**

(57)   The present invention produces chlorinated vinyl chloride resin from which hydrogen chloride can easily be removed and having little coloring as a molded article. Also, chlorinated vinyl chloride resin from which hydrogen chloride can easily be removed and excellent in heat resistance and thermal stability can be produced using a process for preparing chlorinated vinyl chloride resin by gas-solid contact chlorination which is excellent in simplicity of after treatment and facility costs. Chlorination is conducted rapidly and evenly by exposing vinyl chloride resin powder in a fluidized state with light from a light source located outside the powder layer, while supplying chlorine to the powder layer, by. using devices such as a rotary reactor or stirring type reactor.

FIG. 4

EP 1 361 231 A1

**Description**

TECHNICAL FIELD

The present invention relates to a process for preparing chlorinated vinyl chloride resin, which comprises reacting chlorine and vinyl chloride resin powder in a gas-solid contacting field utilizing light to advance reaction. Also, the present invention relates to a process for preparing chlorinated vinyl chloride resin having little color as a molded article, in which after treatment such as rinsing, drying and wastewater disposal is simple, as a result of reacting vinyl chloride resin prepared by a specific process and chlorine in a gas-solid contacting field.

BACKGROUND ART

Chlorinated vinyl chloride resin obtained by chlorinating vinyl chloride resin has excellent heat resistance, flame resistance, mechanical strength and electric properties and is used in various industries. For example, the glass transition temperature of normal vinyl chloride resin is approximately 80°C, but the glass transition temperature of chlorinated vinyl chloride resin, which rises along with the increase in the content of chlorine, is 120° to 130°C. Also, the Vicat softening temperature is also a high temperature of approximately 120°C. As a result of having such high heat resistance, chlorinated vinyl chloride resin is used for heat resistant pipes, heat resistant joints, heat resistant valves and heat resistant sheets.

An industrial process for preparing chlorinated vinyl chloride resin comprises the two steps of obtaining vinyl chloride resin by polymerizing a vinyl chloride monomer by suspension polymerization and post-chlorinating the vinyl chloride resin. In the first step of suspension polymerization, a process using a suspension agent having a main component of partially hydrolyzed poly(vinyl acetate) as the suspension agent is common.

Conventionally, for synthesis of chlorinated vinyl chloride resin, water suspension chlorination method has mainly been used. The water suspension chlorination method is a method in which a water suspension of vinyl chloride resin having a solid concentration of a few % to a few dozen % is filled into a reaction vessel and reacted by feeding chlorine while stirring the water suspension. Further, as the reaction does not advance or is extremely slow by this method only, light, heat or a catalyst to advance the reaction is supplied to the water suspension. The water suspension chlorination method is advantageous in that stirring and mixing of the particles is easy, controlling the reaction is easy due to use of a low concentration chlorine solution, and chlorine easily permeates into the resin as the vinyl chloride resin is plasticized by water. As a result, this method has been employed in many facilities for preparing chlorinated vinyl chloride resin.

However, the water suspension chlorination method has an essential problem which cannot be solved. In the reaction by which chlorinated vinyl chloride resin is produced from vinyl chloride resin and chlorine, hydrogen chloride is generated as shown by the following formula. Therefore, chlorinated vinyl chloride resin after the reaction is suspended in a hydrochloric acid solution of high concentration.

$$(CH_2\text{-}CHCl)_n + mCl_2 \rightarrow (CH_2\text{-}CHCl)_n\text{-}m(CHCl\text{-}CHCl)_m + mHCl$$

Usually, chlorinated vinyl chloride resin must be shipped in the form of powder and hydrogen chloride which is an impurity must be removed. Therefore, the water suspension fluid of chlorinated vinyl chloride resin after reaction must be dehydrated, washed and dried. As a result, in the overall process, a great deal of facility costs and running costs for drying and washing become necessary in the after treatment steps. Moreover, water and hydrogen chloride are azeotropic so hydrogen chloride cannot ultimately be removed from the product until completely dried.

Furthermore, in the water suspension chlorination method, the reaction solution when the reaction is finished becomes a hydrochloric acid solution having a high concentration of approximately 10 % by weight. Consequently, in the water suspension chlorination method, an expensive corrosion resistant metal material such as titanium or titanium palladium must be used for the reaction device or a device subjected to surface treatment such as glass lining or fluorine lining must be used. In addition, the reaction solution is carried on to the after treatment steps and so expensive corrosion resistant material must also be used in the after treatment steps.

In this way, though the reaction device for water suspension chlorination method itself is relatively simple and easy to control, the device is problematic in that a large burden is applied to facility costs and running costs, when considering the whole process including the after treatment steps.

On the other hand, in order to compensate for the problems of water suspension chlorination method, a process for synthesizing chlorinated vinyl chloride resin by gas-solid contact chlorination, in which powder particles of vinyl chloride resin and chlorine react in a gas-solid contacting field, has been suggested. In the gas-solid contact chlorination method, the hydrogen chloride which is generated is discharged from the system as gas. Therefore, the only hydrogen chloride remaining after the reaction is finished are those present between the powder particles and adsorbed to the surface of the powder particles. The remnant hydrogen chloride can easily be removed by supplying gas such as air or nitrogen or degassing the system with a vacuum pump. Therefore, in the after treatment steps of gas-solid contact chlorination method, a product having low content of hydrogen chloride which is an impurity can be obtained without going through complicated steps such as washing, dehydrating and drying.

Furthermore, in the gas-solid contact chlorination method, reaction is conducted in a state in which water is not present within the reaction system or a small amount of water is adsorbed to the powder particles. In such a system having little or no water, the corrosiveness of chlorine and hydrogen chloride to metal material is weak and so relatively inexpensive corrosion resistant metal material such as nickel may be used for the reaction device. Also, only a small amount of chlorine and hydrogen chloride remains on the powder particles which are carried on into the after treatment steps and so an inexpensive metal material may also be used in the after treatment steps.

As described above, the. gas-solid contact chlorination method in which a powder layer of vinyl chloride resin and chlorine react is excellent from the viewpoints of facility costs, wastewater disposal and safety.

However, in the gas-solid contact chlorination method, quality is a problem. That is, in the gas-solid contact chlorination method, advancing the reaction evenly was difficult and when compared to chlorinated vinyl chloride resin of the same reaction rate obtained by the water suspension chlorination method, there was the disadvantage that quality decreased. This decrease in quality refers to problems such as a decrease in heat resistance due to a decrease in the Vicat softening point and Tg, a decline in initial coloring properties due to coloring of the resin after molding by heat and a decrease in thermal stability due to progression of thermal decomposition when the resin after molding is exposed to a high temperature. The reason for this decrease in quality is thought to lie in an uneven reaction of chlorine and vinyl chloride resin. Here, uneven reaction stands for both unevenness in a broad sense meaning the reaction rate differs in each particle and unevenness in a narrow sense meaning the reaction rate differs between the surface and interior of one particle. Furthermore, in the gas-solid contact chlorination method in which light is used to advance the reaction, the resin is denatured by heat from the light source and a decrease in initial coloring properties and thermal stability have been pointed out. In addition, in the gas-solid contact chlorination method, when a suspension agent having an acetic acid group is contained in vinyl chloride resin which is the base material, initial coloring properties of the molded article have been found to deteriorate. On the other hand, in the water suspension chlorination method, the acetic acid group contained in vinyl chloride resin is hydrolyzed and deterioration in initial coloring properties resulting from an acetic acid group is light. In this way, resin obtained by the gas-solid contact chlorination method has problems regarding quality such as heat resistance, initial coloring properties and thermal stability.

Several means to solve such problems of gas-solid contact chlorination method have been suggested. For example, the reason for unevenness in the reaction of gas-solid contact chlorination is caused by the vinyl chloride resin not being evenly exposed by light which is the source for generating radicals and so there is the method of employing a radical-generating source other than light energy. JP-A-59-24705 discloses a method for advancing chlorination of vinyl chloride resin in the absence of light, by mixing a small amount of oxygen in the chlorine. JP-B-60-2322 discloses a method for obtaining chlorinated vinyl chloride resin by impregnating the vinyl chloride resin with chlorine under a high pressure and low temperature and then generating heat radical within the vinyl chloride resin by heating. However, these methods require a long reaction time, as the reaction ratio of the obtained chlorinated vinyl chloride resin is low. In addition, problems of quality were not sufficiently solved.

Also, in methods using light as the source for generating radicals, means to improve the quality of chlorinated vinyl chloride resin have been suggested. JP-B-54-39878 suggests a method to prevent denaturing of the vinyl chloride resin due to heat from the light source, by inserting the light source into the powder layer of a fluidized-bed reactor and then supplying a solution that blocks light of a wavelength range which is not related to the reaction around the light source. However, in such a method, because the light source is inserted in the powder layer of vinyl chloride resin, light is only exposed near the light source and the powder layer may not be evenly chlorinated. Particularly for a device of a production facility scale, this method is impractical because in order to improve uneven chlorination, many light sources must be inserted into the powder layer. In JP-B-52-15638, the distance between powder particles is spread by fluidizing the powder layer into which the light source was inserted using chloride gas of at least a certain flow rate. As a result, the powder layer is made opaque and light is able to reach the interior of the powder layer. However, in such a method, many light sources must be inserted in the powder layer and equipment for recovering the powder layer must be installed, as the powder layer flies in all directions at the superficial velocity at which the powder layer is made opaque. Furthermore, equipment for supplying a great deal of chloride gas, which is toxic and highly corrosive, is necessary. This equipment has problems such as high facility costs, low maintenance properties and extremely low reaction ratio of the passing chlorine.

As described above, the conventional water suspension chlorination method has the problems of after-treatment facilities and corrosion of the device and the conventional gas-solid contact chlorination method has the problems of uneven reaction and decline in quality caused by the suspension agent contained in the starting resin.

Regarding the chlorinated vinyl chloride resin having little coloring when molding obtained by the water suspension chlorination method, various means to improve color tone have been suggested, in order to answer to the high level of demand for color tone in uses such as sheets and films. For example, JP-A-3-166205 suggests a method for improving the color tone of the obtained chlorinated vinyl chloride resin by conducting post-chlorination with water suspension chlorination of vinyl chloride resin polymerized using hydroxypropylmethyl cellulose as the suspension agent. Also, JP-A-5-186507 and JP-A-5-186520 disclose a method of post-chlorinating vinyl chloride resin polymerized using a cellulose type suspension agent and sodium alkyl sulfosuccinate or sodium alkyl diphenyl ether sulfonate together. In addition, JP-A-63-108004, JP-A-62-84103 and JP-A-62-257914 suggest a method for obtaining resin having little color by post-chlorinating a copolymer obtained by polymerizing vinyl chloride and olefins such as ethylene or propylene using a cellulose type suspension agent. Furthermore, JP-A-4-106110 discloses a method of post-chlorinating vinyl chloride resin polymerized using polyethylene oxide as the suspension agent and JP-A-10-306108 discloses a method of post-chlorinating vinyl chloride resin polymerized using polyethylene oxide and cellulose ether as the suspension agent.

As described above, the method of conducting post-chlorination with the water suspension chlorination method to vinyl chloride resin polymerized using cellulose type compounds or polyethylene oxide as a dispersing agent without using partially hydrolyzed poly(vinyl acetate) is a conventionally known art. However, the method of post-chlorination is not particularly specified in any of the conventional arts. Also, these arts only describe the post-chlorination reaction by the water suspension chlorination method in the working examples and do not include working examples regarding the post-chlorination reaction by the gas-solid contact chlorination method, which is an important factor of the present invention. Furthermore, neither the fact that the coloring properties of molded article of chlorinated vinyl chloride resin obtained by the gas-solid contact chlorination method is extremely poor when compared to that of chlorinated vinyl chloride resin obtained by the water suspension chlorination method nor the means to solve this problem are described. As mentioned below, the extreme decrease of coloring properties in a molded article obtained by the gas-solid contact chlorination method caused by the acetic acid group contained in a suspension agent cannot be observed in the water suspension chlorination method due to the mechanism thereof. Therefore, the art of the present invention which improves coloring in a molded article of chlorinated vinyl chloride resin obtained by the gas-solid contact chlorination method has been found based on a technical idea that differs from the conventionally known art and exhibits a substantially different effect.

The object of the present invention is to provide a process for preparing chlorinated vinyl chloride resin having good initial coloring property as a molded article by the gas-solid contact chlorination method, which is excellent in simplicity of after treatment and facility costs, and an apparatus for preparing the same.

DISCLOSURE OF INVENTION

In the gas-solid contact chlorination method, it was found that the chlorination reaction advances rapidly and evenly by reacting vinyl chloride resin and chlorine with the light source for advancing reaction adjusted at a specific position, and that by a simple after-treatment the amount of remnant hydrogen chloride is reduced and chlorinated vinyl chloride resin having high heat resistance and thermal stability can be prepared.

The mechanism of coloring was studied with the object of improving coloring in a molded article of chlorinated vinyl chloride resin obtained by the gas-solid contact chlorination method. As a result, the cause of coloring was found to lay in the acetic acid group of partially hydrolyzed poly(vinyl acetate) and coloring due to the acetic acid group was found to be characteristic of chlorinated vinyl chloride resin obtained by the gas-solid contact chlorination method.

Furthermore, even when partially hydrolyzed poly(vinyl acetate) needs to be added in order to elevate the stability of vinyl chloride resin when polymerizing, both simplicity of the after-treatment steps and improvement in the initial coloring property of a molded article were found to be possible by synthesizing chlorinated vinyl chloride resin by conducting post-chlorination with the gas-solid contact chlorination method to vinyl chloride resin which is polymerized by reducing the amount of partially hydrolyzed poly(vinyl acetate) used as the suspension agent to a specific range.

That is, the present invention relates to a process for preparing chlorinated vinyl chloride resin, which comprises conducting post-chlorination reaction of vinyl chloride resin and chlorine in a gas-solid contacting field by exposing light to the surface of the powder layer of vinyl chloride resin from a light source located inside a rotary reactor and outside the powder layer while supplying chlorine to the powder layer within the rotary reactor.

The present invention also relates to a process for preparing chlorinated vinyl chloride resin which comprises synthesizing vinyl chloride resin by suspension polymerization of a vinyl chloride monomer in the presence of a oil soluble polymerization initiator using as the suspension agent at least one member selected from the group consisting of water-soluble cellulose ether and polyethylene oxide and conducting post-chlorination reaction of the obtained vinyl chloride resin and chlorine in a gas-solid contacting field.

The present invention also relates to chlorinated vinyl chloride resin prepared by conducting post-chlorination reaction of vinyl chloride resin and chlorine in a gas-solid contacting field by exposing light to the surface of the powder layer of vinyl chloride resin from a light source located inside the rotary reactor and outside the powder layer while supplying chlorine to the powder layer inside the rotary reactor.

Furthermore, the present invention relates to an apparatus for preparing chlorinated vinyl chloride resin, which comprises a means for supplying chlorine to the powder layer of vinyl chloride resin inside the rotary reactor and a means for exposing light to the surface of the powder layer from a light source located inside the rotary reactor and outside the powder layer.

BRIEF DESCRIPTION OF DRAWINGS

Fig. 1 is a model drawing depicting chlorination of powder particles of vinyl chloride resin.
Fig. 2 is a diagram depicting the area in which the reaction advances when the light source is located inside the powder layer and when located outside the powder layer.
Fig. 3 is a diagram depicting the area in which the reaction advances when the position for supplying chlorine is altered.
Fig. 4 depicts an embodiment of a rotating preparation apparatus of the present invention in which the light source is located outside the reaction vessel.
Fig. 5 depicts an embodiment of a rotary reactor of the present invention in which the light source is located inside the reaction vessel.
Fig. 6 depicts an embodiment of a rotary reactor of the present invention in which the light source is located inside the reaction vessel.
Fig. 7 depicts an embodiment of a rotary reactor of the present invention in which the light source is located inside the reaction vessel.

BEST MODE FOR CARRYING OUT THE INVENTION

The steps for conducting the present invention are described below. The process of the present invention is divided into the step of synthesizing vinyl chloride resin by conducting water suspension polymerization of vinyl chloride monomers and the step of post-chlorination by the gas-solid contact chlorination method after drying the obtained vinyl chloride resin.

In the present invention, vinyl chloride resin is synthesized by suspension polymerization. Usually, suspension polymerization is conducted by the method of adding a suspension agent and a polymerization initiator to a mixture containing water and vinyl chloride monomers and then stirring. The cause for decline of coloring properties in a molded article of chlorinated vinyl chloride resin obtained by gas-solid contact chlorination lies in the acetic acid group remnant in partially hydrolyzed poly(vinyl acetate) which is used as the suspension agent. Therefore, the amount of acetic acid group used for the suspension polymerization reaction must be a certain amount or less. A value equivalent to the ratio of vinyl chloride monomers and acetic acid groups in the partially hydrolyzed poly(vinyl acetate) when conducting suspension polymerization was defined and the present invention was accomplished by limiting the range.

The mechanism by which a molded article of chlorinated vinyl chloride containing partially hydrolyzed poly (vinyl acetate) is colored and the reason why this coloring is a phenomenon characteristic of gas-solid contact chlorination are described below.

Partially hydrolyzed poly(vinyl acetate) is obtained by denaturing part or most of the acetic acid groups into hydroxyl groups by hydrolyzation of poly(vinyl acetate) and generally called partially hydrolyzed poly(vinyl alcohol). The acetic acid groups contained in partially hydrolyzed poly(vinyl acetate) are functional groups having more reactivity in comparison to hydroxyl groups. Therefore, when chlorinated vinyl chloride in which acetic acid groups are mixed is heated, the chlorinated vinyl chloride and the acetic acid groups react in some way and the main chain within chlorinated vinyl chloride is disconnected or a double bond is formed in the main chain. In vinyl chloride resin or chlorinated vinyl chloride resin, when a double bond is produced in part of the main chain, double bonds are known to occur successively one after another (zipper reaction). Polymers in which the number of double bonds have increased exhibit a yellow to dark brown color. This is the mechanism by which chlorinated vinyl chloride resin is colored.

The reason why coloring by acetic acid groups occurs specifically to chlorinated vinyl chloride resin obtained by gas-solid contact chlorination is described below. As mentioned above, when chlorinating vinyl chloride resin, a great deal of hydrogen chloride is produced as indicated in the above formula. When conducting post-chlorination of vinyl chloride resin by the water suspension chlorination method, hydrogen chloride dissolves into water and so chlorinated vinyl chloride resin is in a state of suspension in high concentration hydrochloric acid. The acetic acid groups within partially hydrolyzed poly(vinyl acetate) are known to be saponified (i.e. hydrolyzed) in the presence of an acid catalyst and water. Therefore, in the reaction steps of the water suspension chlorination method, the partially hydrolyzed poly(vinyl acetate) contained in chlorinated vinyl chloride becomes completely hydrolyzed poly(vinyl acetate) and loses all acetic acid groups and as a result no longer is a substance which causes a decline in coloring properties in a molded article. On the other hand, when synthesizing chlorinated vinyl chloride resin by gas-solid contact chlorination, water is not present in the system or present in a miniscule amount so the partially hydrolyzed poly(vinyl acetate) contained in the vinyl chloride resin is not hydrolyzed. Consequently, the acetic acid groups remain in the chlorinated vinyl chloride resin obtained by gas-solid contact chlorination and the molded article thereof is colored by the mehcanism described above.

The amount of partially hydrolyzed poly(vinyl acetate) added when conducting polymerization of vinyl chloride resin can be defined using the value Y represented by equation (1).

$$Y = (1 - \alpha/100) \times M \tag{1}$$

In the equation, $\alpha$ is the hydrolyzation degree of partially hydrolyzed poly(vinyl acetate) represented in % by mole and M is the amount of partially hydrolyzed poly(vinyl acetate) added represented by parts by weight based on 100 parts by weight of vinyl chloride monomer.

The value Y is preferably as small as possible from the viewpoint of improving coloring properties of the molded article and is most preferably 0. That is, most preferably, partially hydrolyzed poly(vinyl acetate) is not used or poly(vinyl acetate) in which acetic acid groups are completely hydrolyzed (completely hydrolyzed poly(vinyl alcohol)) is used as a suspension agent. On the other hand, when a small amount of partially hydrolyzed poly(vinyl acetate) is used as a suspension agent, the polymerization stability of vinyl chloride resin is effectively improved. Therefore, from the viewpoint of obtaining both polymerization stability and coloring properties in a molded article of vinyl chloride resin, the amount is so that the range of value Y preferably becomes 0.0001 to 0.004, more preferably 0.001 to 0.004. When value Y is less than 0.0001, coarse particles and scale tends to develop when conducting polymerization of the vinyl chloride resin and when value Y is greater than 0.004, the coloring properties of the molded article tend to become poor.

The above $\alpha$ is a value representing the hydrolyzation degree of partially hydrolyzed poly(vinyl acetate) in % by mole and is preferably 70 to 98 % by mole, more preferably 80 to 90 % by mole. When $\alpha$ is less than 70 % by mole, the polymerization stability of vinyl chloride resin tends to decrease and when $\alpha$ is greater than 90 % by mole, the polymerization stability of vinyl chloride resin tends to decrease as well.

The above M is a value representing in parts by weight the amount of partially hydrolyzed poly(vinyl acetate) added based on 100 parts by weight of vinyl chloride monomers and is preferably 0.005 to 0.05 part by weight, more preferably 0.01 to 0.02 part by weight. When M is less than 0.005 part by weight, the polymerization stability of vinyl chloride resin tends to decrease and when M is greater than 0.05 part by weight, the coloring properties of the molded article tend to become poor.

In the present invention, any conventionally known suspension agent may be used as long as acetic acid groups are not included. For example, water-soluble cellulose ether and polyethylene oxide may be used alone or in a combination. Examples of the water-soluble cellulose ether are methyl cellulose, hydroxypropylmethyl cellulose, carboxymethyl cellulose, ethyl cellulose and hydroxyethylmethyl cellulose. Of these, hydroxypropylmethyl cellulose is preferably used. Also, from the viewpoint of stable progression of suspension polymerization and definite improvement of the coloring properties in a molded article, at least one member selected from the group consisting of water-soluble cellulose ethers and polyethylene oxides is preferably used as a suspension agent.

When water-soluble cellulose ether is used alone as a suspension agent, the amount added is preferably 0.0065 to 2.2 parts by weight, more preferably 0.01 to 0.05 part by weight, based on 100 parts by weight of the vinyl chloride monomer. When the amount is less than 0.0065 part by weight, the polymerization stability of vinyl chloride resin tends to decrease and when the amount is greater than 2.2 parts by weight, the particles of the obtained vinyl chloride resin tend to become extremely small and difficult to handle.

When polyethylene oxide is used alone as a suspension agent, the amount added is preferably 0.0065 to 2.2 parts by weight, more preferably 0.03 to 0.2 part by weight, based on 100 parts by weight of the vinyl chloride monomer. When the amount is less than 0.0065 part by weight, the polymerization stability of vinyl chloride resin tends to decrease and when the amount is greater than 2.2 parts by weight, the solubility of polyethylene oxide tends to decrease.

When a mixture of water-soluble cellulose ether and polyethylene oxide is used as a suspension agent, the total amount of the mixture is preferably 0.0065 to 2.2 parts by weight, more preferably 0.04 to 0.25 part by weight, based on 100 parts by weight of the vinyl chloride monomer. In this case, the amount of water-soluble cellulose ether mixed is 0.0025 to 0.20 part by weight, more preferably 0.01 to 0.05 part by weight. When the amount is less than 0.0025 part by weight, the polymerization stability of vinyl chloride resin tends to decrease and when the amount is more than 0.20 part by weight, the particles of the obtained vinyl chloride resin tend to become extremely small and difficult to handle. The amount of polyethylene oxide mixed is preferably 0.004 to 2.0 parts by weight, more preferably 0.03 to 0.2 part by weight. When the amount is less than 0.004 part by weight, the polymerization stability of vinyl chloride resin tends to decrease and when the amount is more than 2.0 parts by weight, the solubility of polyethylene oxide tends to decrease.

The water-soluble cellulose ether used in the present invention as a suspension agent preferably has a viscosity of 20 to 20,000 mPa·s in an aqueous solution of 2 % by weight thereof at 20°C. When the viscosity is lower than 20 mPa·s, the dispersant film formed on the resin surface becomes soft and the toughness of the molded article obtained by molding the vinyl chloride resin composition utilizing the obtained resin tends to decrease. On the other hand, when the viscosity is more than 20,000 mPa·s, the dispersant film formed on the resin surface becomes hard and the processability of the vinyl chloride resin composition utilizing the obtained resin tends to decrease.

Also, the polyethylene oxide preferably has a number average molecular weight of 200,000 to 5,000,000. When the number average molecular weight is less than 200,000, the polymerization stability of vinyl chloride resin tends to decrease and when the number average molecular weight is more than 5,000,000, solubility of polyethylene oxide tends to decrease.

The vinyl chloride monomer of the present invention includes vinyl chloride alone or a monomer mixture containing 0 to 20 % by weight of another monomer copolymerizable with vinyl chloride and 100 to 80 % by weight of vinyl chloride. When the amount of vinyl chloride is less than 80 % by weight, the heat resistance of the ultimately obtained chlorinated vinyl chloride resin tends to decrease. Examples of the monomers copolymerizable with vinyl chloride are olefins such as ethylene and propylene, allyl monomers such as allyl chloride and allyl glycidyl ether and esters such as acrylate ester and methacrylate ester. These may be used alone or in a combination of two or more kinds. However, vinyl acetate may not be used in view of the essence of the present invention, which is not containing acetic acid groups.

A conventionally known initiator may be used as the oil-soluble polymerization initiator of the present invention. Examples are organic peroxides such as benzoyl peroxide, lauryl peroxide, di-2-ethylhexylperoxy dicarbonate, t-butylperoxy neodecanate, 3,5,5-trimethylhexanoylperoxy dicarbonate, S-butylperoxy dicarbonate and diisopropylperoxy dicarbonate and azo compounds such as azobisisobutyrovalero nitrile and azobisvalero nitrile. These initiators may be used alone or in a combination of two or more kinds. Also, the amount of the initiator is preferably approximately 0.001 to 2 parts by weight based on 100 parts by weight of vinyl chloride monomer from the viewpoint of polymerization stability when conducting suspension polymerization of vinyl chloride resin. When the amount of the oil-soluble polymerization initiator used is less than 0.001 part by weight, the polymerization reactions may not progress sufficiently and when the amount is greater than 2 parts by weight, the polymerization reaction becomes too fast and abnormal polymerization tends to occur.

In the present invention, conventionally known polymerization additives such as a chain transfer agent, color improving agent for the molded article and metallic salt may be used according to the purpose.

Examples of the chain transfer agent are mercapto compounds such as 2-mercaptoethanol, butyl mercaptan, octyl mercaptan and dodecyl-N-mercaptan, halogenated olefins such as trichloroethylene and olefins such as 1-butene. These may be used alone or in a combination of two or more kinds.

Examples of the color improving agent for the molded article are anti-oxidants of sulfur-containing compounds such as distearyl dithiopropionate or dilauryl dithiopropionate and of phenol-type compounds such as t-butyl hydroxyanisole and di-t-butyl hydroxytoluene, sorbitan ester compounds and glycerine ester compounds. These may be used alone or in a combination of two or more kinds.

Examples of the metallic salt are alkali metal, alkali earth metal, metalloid hydrosulfate, hydrochloride and hydroborate. These may be used alone or in a combination of two or more kinds.

In the step of post-chlorination by gas-solid contact chlorination of the vinyl chloride resin obtained by the above method, a suspension of vinyl chloride resin obtained by suspension polymerization is prepared and powder vinyl chloride resin is obtained by dehydrating and drying the suspension. Further, by reacting the obtained powder vinyl chloride resin and chlorine, the desired chlorinated vinyl chloride resin is synthesized.

The essence of the present invention lies in obtaining chlorinated vinylchloride resin by conducting post-chlorination of vinyl chloride resin containing a certain amount or less of acetic acid groups. Therefore, the present invention may be applied to vinyl chloride resin synthesized by polymerization other than suspension polymerization such as bulk polymerization, gas phase polymerization and emulsion polymerization, as long as partially hydrolyzed poly(vinyl acetate) is not contained. For example, effects similar to those of the . present invention can be obtained by grinding vinyl chloride resin obtained by bulk polymerization or gas phase polymerization into powder of the above particle size range and then chlorinating. Also, vinyl chloride resin obtained by emulsion polymerization can be granulated to powder of the above particle size range before or after drying using a spray dryer and then chlorinated.

Next, the method for post-chlorination of the vinyl chloride resin is described.

The position where the light source is located is the most important element of the present invention. That is, in the present invention, the light source must be located outside the powder layer and expose the surface of the powder layer with light. The reason for placing the light source outside the powder layer lies firstly in that the light source of a high temperature is not directly in contact with the resin, secondly in that the light is dispersed and exposed over a wide range and thirdly in that various reaction devices can be selected.

The first reason which is that the light source of a high temperature is not directly in contact with the powder layer is advantageous in that decline in quality of the resin can be reduced. The reaction rate of the chlorination reaction of vinyl chloride resin improves significantly when the temperature of the reaction field is set to 60 to 80°C. However, the glass transition temperature of the vinyl chloride resin to be chlorinated is approximately 80 to 85°C and when the reaction temperature is higher than 80°C, the properties of the resin are altered and thermal stability and coloring when molding tend to become problematic. Also, when the temperature is lower than 60°C, the dispersion rate of chlorine into the particles declines and as a result, chlorination within the particles tends to be insufficient and the reaction rate tends to significantly decline. On the other hand, because chlorination reaction of vinyl chloride resin is an extremely strong exothermal reaction, heat removal must be conducted as soon as the reaction starts. In this way, chlorination reaction of vinyl chloride resin requires accurate temperature control. When the light source is located within the powder layer, the temperature of some parts of the powder layer around the light source rises significantly due to exothermic heat from the light source and reaction heat generated in a large amount. As a result, the properties of the resin are altered and quality becomes inferior. Particularly, gas-solid contact chlorination exerts adverse effects compared to suspension chlorination as heat conductivity is low and removing heat is difficult. By contrast, in the present invention in which the light source is located outside the powder layer, deterioration of the resin can be reduced as the light source is not directly in contact with the resin and the reaction advances gradually in a wide area as the light is dispersed.

The second reason of dispersing light is advantageous in that both evenness in reaction ratio and increase in reaction area can be attained by controlling the reaction rate within each powder particle.

When reacting vinyl chloride resin and chlorine using light, the stronger the light that is exposed to each powder particle, the faster the reaction rate. At first, a faster reaction rate may seem advantageous but in chlorination reaction of vinyl chloride resin, dispersion of chlorine into the powder particles is also an important factor and so the state in which the light exposed to each powder particle is too strong is not preferable.

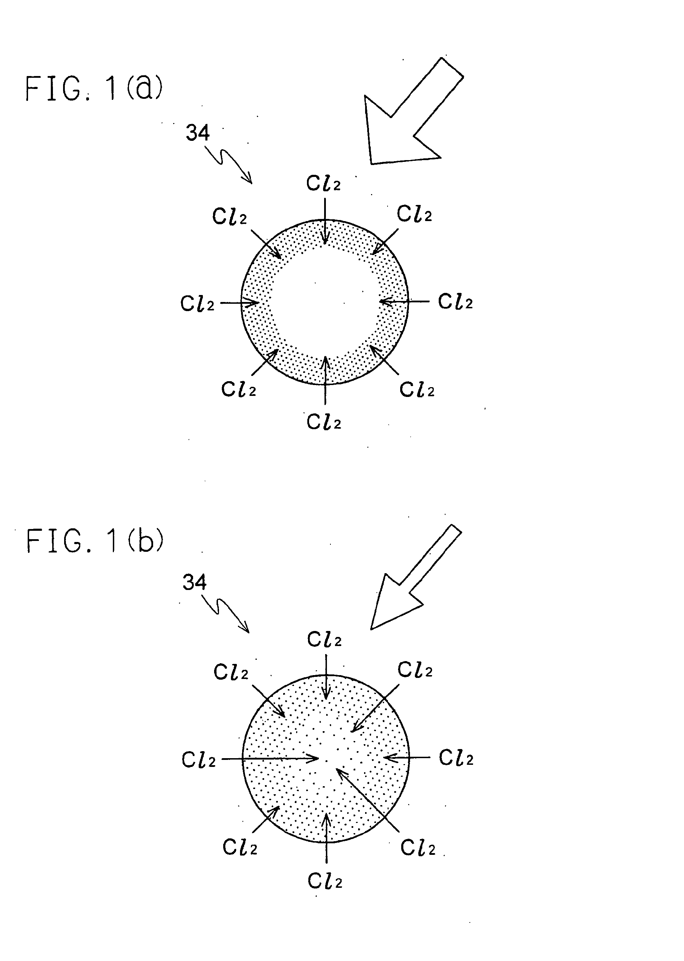

When the temperature and the chlorine concentration of the gas phase are constant, the dispersion speed of chlorine gas into the powder particles is constant. As shown in Fig. 1 (a), when powder particle 34 is exposed by a strong light, the chlorine gas reacts only with resin near the surface of the powder particles and cannot be dispersed to the interior. In such a case, the reaction ratio differs greatly between the surface and center of the powder particle. On the other hand, when the light source is located outside the powder layer and light is dispersed, chlorination reaction rate within the powder particles declines, as shown in Fig. 1 (b). As a result, chlorine can easily be dispersed to the interior of the powder particles and the reaction ratio between the surface and center of the powder particles become even. Resin in which the reaction ratio in each powder particle is even becomes resin excellent in heat resistance, thermal stability and initial coloring properties.

At the same time, in the case that the reaction rate of each powder particle is reduced, the number of powder particles which react must be increased or the reaction rate of the powder layer as a whole will decrease. Therefore, light must be exposed over as wide an area of the powder layer as possible and an opportunity to be evenly exposed by light must be given to all powder particles.

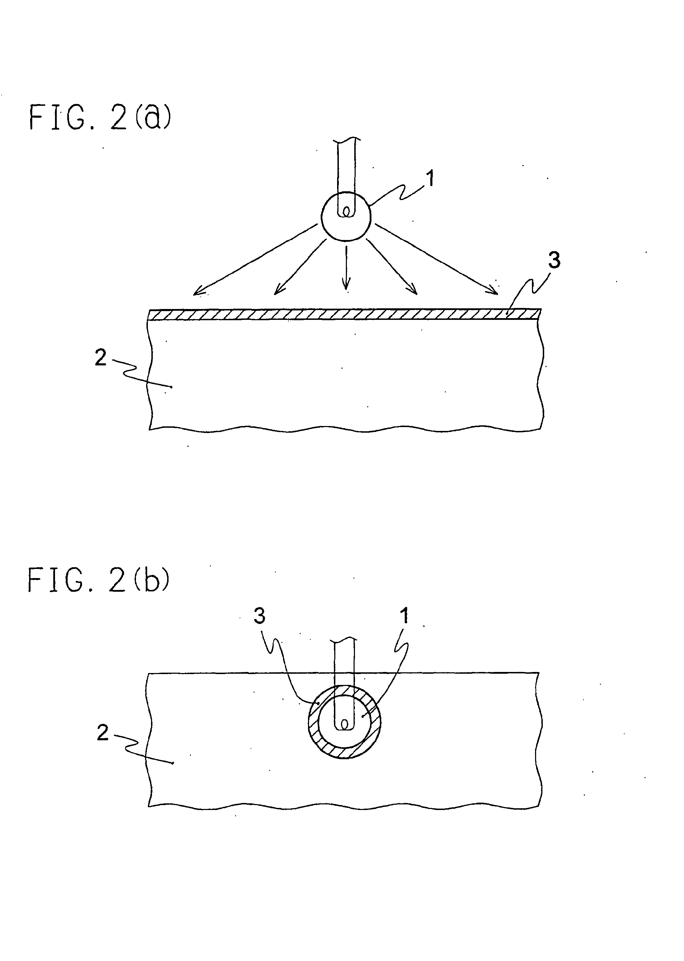

As in the present invention, as shown in Fig. 2 (a), when light source 1 is located outside powder 2, area 3 which is exposed by light is the surface of the powder layer. The surface are of the powder layer differs according the shape of the device but a large surface area is relatively easy to obtain. By contrast, as shown in Fig. 2 (b), when the light source is located within the powder layer, area 3 which is exposed by light is limited to near the light source. In this way, in the present invention, by the extremely simple method of placing the light source outside of the powder layer, the reaction ratio within each powder particle becomes even and decline in the reaction rate of the powder layer as a whole can be prevented.

The advantage of the third reason, which is that various reaction devices can be used, is described below. In the present invention in which the light source is located outside the powder, a rotating type powder device or mechanical mixer type powder device may be used and fluidizing the powder and exposing all powder particles to the powder surface is relatively easy. By gradually mixing and stirring, all powder particles can be exposed to the surface of the powder layer and further the powder particles do not fly in all directions and so a dust collector is not necessary.

On the other hand, in the method of installing the light source in the powder such as in JP-A-52-15638, many light sources must be inserted into the powder layer and rotating the device and fluidizing the powder layer by mechanically mixing are not possible. Therefore, only a fluidized bed reaction device may be used. However, when a fluidized bed reaction device is used, in order to evenly transfer all powder particles to the light source surface, the light source must be installed in multiple locations within the powder layer and the powder must be fluidized by a large amount of chlorine gas. In such a case, because a great deal of the particles flies in all directions, a dust collector must be installed and further, the collected powder particles must be returned to the reaction vessel.

From all of the above, the present invention in which the light source is located outside the powder layer has been found to be an extremely economical and effective method when chlorinating vinyl chloride resin with chlorine gas using light reaction.

The vinyl chloride resin used in the present invention must be powder. In the present invention, powder refers to particles which can move independently in a gas phase as mentioned above and the particle size of each particle is preferably 10 to 2000 μm (average particle size is 50 to 500 μm). When the particle size is less than 10 μm, the particles tend to fly in all directions and adhere to the inside of the device and when the particle size is larger than 2000 μm, chlorination tends to become uneven. In the present invention, powder particles refer to each particle which can move independently in a gas phase and powder layer refers to the powder particles. Also, the liquid wherein particles which are equivalent to powder particles are dispersed in water is referred to as water suspension.

The particle size distribution of the powder particles is preferably even from the viewpoints of raising the flowability of the powder and advancing the reaction evenly. Also, the absolute value of particle size is within a preferable range. Therefore, the powder layer of the vinyl chloride resin used in the present invention is preferably powder particles (average particle size 100 to 300 μm) in which the amount of the powder particles having a particle size of 50 to 500 μm is at least 80 % by weight. When the amount of the powder particles having a particle size of 50 to 500 μm is less than 80 % by weight, flying and adherence of the particles and unevenness in chlorination tend to occur. Each powder particle can be composed of a continuous phase of vinyl chloride resin or an aggregate of smaller primary particles.

Examples of the process for preparing vinyl chloride resin are suspension polymerization, bulk polymerization, gas phase polymerization and emulsion polymerization. However, as the vinyl chloride resin used in the present invention, vinyl chloride resin obtained by suspension polymerization is preferred.

Particularly, vinyl chloride resin, obtained by suspension polymerization of vinyl chloride monomers in the presence of an oil-soluble polymerization initiator using at least one member selected from the group consisting of water-soluble cellulose ethers and polyethylene oxides as the suspension agent, is preferably used. Furthermore, using vinyl chloride resin, obtained by suspension polymerization adding partially hydrolyzed poly(vinyl acetate) having a value Y represented by the above formula (2) of 0.0001 to 0.004 as the suspension agent, is preferable as stability when polymerizing can be increased.

Also, a copolymer of vinyl chloride and an unsaturated hydrocarbon such as vinyl acetate may be used. In the case that the vinyl chloride resin obtained after the polymerization reaction is in a water suspension, drying must be conducted and when the resin is an aggregate, grinding must be conducted. Vinyl chloride resin obtained by bulk polymerization is difficult to grind and vinyl chloride resin synthesized by gas phase polymerization is usually difficult to come by. Also, vinyl chloride resin obtained by emulsion polymerization contains a great deal of emulsifier. Consequently, the vinyl chloride resin used in the present invention is preferably obtained by suspension polymerization.

When vinyl chloride resin is synthesized by suspension polymerization or emulsion polymerization, the fine particles of vinyl chloride resin are in a dispersed state in water so powder particles can be obtained simply by drying. However, in this case, continuous layers called skin layers are formed on the surface of the powder particles and inhibit the permeation of chlorine gas to the interior. As a result, the reaction rate tends to become slow and the reaction ratio tends to become uneven in the radial direction of the powder particles. Therefore, the powder particles of vinyl chloride resin used in the present invention can be effectively used by grinding before chlorination reaction to destroy the skin layers.

In the present invention, vinyl chloride resin containing water may be used as long as the powder layer can be fluidized. However, when the water content is too large, the water and hydrogen chloride become azeotropic and as mentioned above in the description of water suspension chlorination method, removing the hydrogen chloride generated by the reaction from the resin becomes difficult. Therefore, the water content in the powder layer is preferably less than 5 % by weight. Also, in order to prevent aggregation and adherence to the vessel of the powder particles due to static electricity, water of less than 5 % by weight can deliberately be included in the vinyl chloride resin powder.

The chlorine used in the present invention is chlorine commonly used industrially and is not particularly limited. However, if the chlorine contains oxygen, the thermal stability and coloring properties when molding of the obtained chlorinated vinyl chloride resin decline and so the concentration of oxygen in the chlorine is preferably at most 100 ppm, more preferably at most 20 ppm. Also, when the chlorine contains water, removing the hydrogen chloride generated by the reaction from the resin becomes difficult and corrosion of the device tends to occur and so the amount of water is preferably at most 1000 ppm. Also, in order to adjust the reaction rate and reaction temperature, the chlorine can be mixed with inert gas such as nitrogen or argon.

The method for supplying chlorine gas in the present invention is described below. In the present invention, the state of the chlorine to be supplied into the reaction device can be either gas or liquid. Chlorine which is commonly used industrially is liquid chlorine sealed in a high pressure cylinder. Consequently, when supplying the chlorine as gas, liquid chlorine drawn from the liquid chlorine cylinder is vaporized in a different vessel and then supplied to the reaction vessel. When supplying liquid chlorine into the reaction vessel, liquid chlorine drawn from the liquid chlorine cylinder can be vaporized within the reaction device. The method of vaporizing chlorine in the reaction device is preferable, as the method is effective in controlling the increase in temperature within the reaction device because heat for vaporization removes heat from the reaction. However, if liquid chlorine comes directly into contact with vinyl chloride resin, the surface structure and inner structure of vinyl chloride resin are altered. Therefore, a means to keep the liquid chlorine from coming into contact with the vinyl chloride resin before the liquid chlorine is vaporized in the reaction vessel must be devised. Here, the flow rate of chlorine gas is preferably 500 to 50,000 ml/minute based on 1 kg of vinyl chloride resin. When the flow rate is less than 500 ml/minute, the coloring properties when molding tend to decrease due to lack of chlorine arid when the flow rate is greater than 50,000 ml/minute, the resin tends to fly in all directions. The time for supplying chlorine gas is preferably 60 to 600 minutes. When the time is shorter than 60 minutes, the reaction becomes too fast and the chlorination tends to become uneven and when the time is longer than 600 minutes, the chlorine tends to be used wastefully.

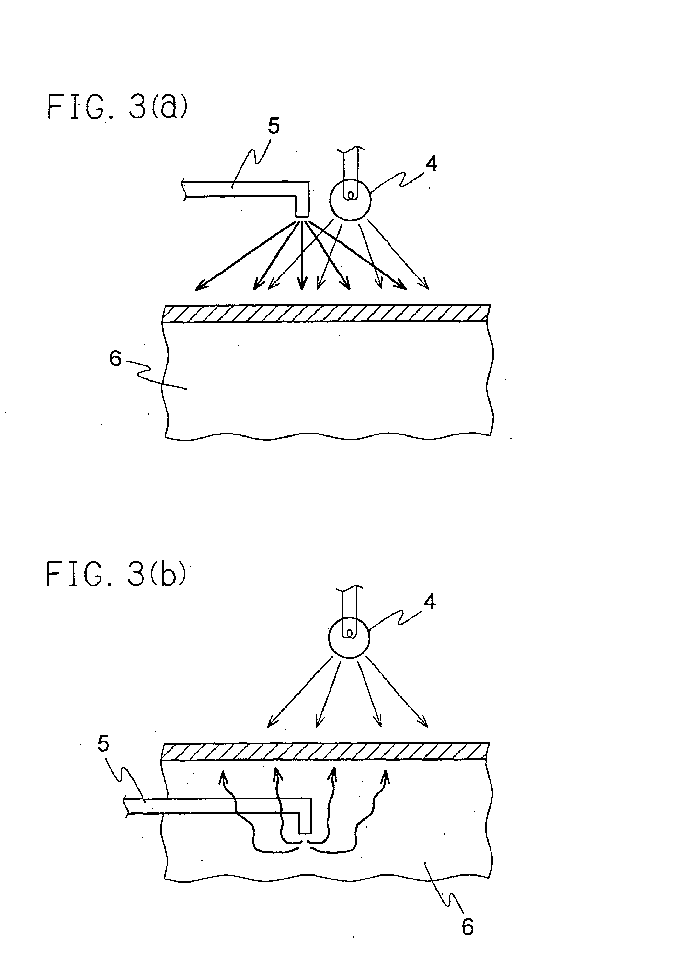

The chlorine is supplied from any location within the reaction vessel. The chlorine can be supplied into the powder layer of vinyl chloride resin, as shown in Fig. 3 (b), or into the gas phase as shown in Fig. 3 (a). Here, numeral 4 represents the light source, numeral 5 represents the chlorine supplying port and numeral 6 represents the powder layer. When chlorine is supplied to the location of Fig. 3 (b), the chlorine reaches the surface of powder layer 6 to which light is exposed after thoroughly permeating into the powder particles and so the reaction is conducted efficiently. Also, the supply port is preferably shaped so that the chlorine is discharged facing downwards to the powder layer. When supplying chlorine to the gas phase as in Fig. 3 (a), chlorine is efficiently supplied to the powder layer surface by discharging the chlorine downwards. When supplying chlorine to inside the powder layer as in Fig. 3 (b), by discharging the chlorine downwards, chlorine gas disperses evenly within the powder layer and clogging of the opening of the chlorine supply port by powder particles can be prevented. Further, as mentioned above, liquid chlorine and the powder layer coming into contact is not preferable and so when supplying chlorine into the powder layer as shown in Fig. 3 (b), the chlorine is preferably vaporized before coming into contact with the powder layer.

The method for discharging hydrogen chloride gas of the present invention is described below. In the suspension method conventionally used for preparing chlorinated vinyl chloride resin, discharging hydrogen chloride does not have to be considered as hydrogen chloride generated by the reaction dissolves into the water phase. However, in the present invention in which the reaction is conducted in a gas-solid contacting field, the pressure within the reaction vessel rises if an amount of hydrogen chloride equivalent to the amount of chlorine to be supplied is not discharged from the reaction vessel. The hydrogen chloride can be discharged by any method but if chlorine is also discharged when discharging the hydrogen chloride, efficiency is low so the vent for hydrogen chloride is preferably kept as far as possible from the supplying port of chlorine.

The vent for hydrogen chloride is most preferably located outside the powder layer. Also, powder attached to the walls of the reaction vessel falls from the upper area of the vent, along with rotation of the reaction vessel and clogging of the vent may occur. Therefore, the opening preferably faces sideways or downwards and the opening facing downward is more preferable.

Next, the method for fluidizing the powder layer of the present invention is described below. In the present invention, the fluidized state refers to the entire state of powder particles travelling continuously or intermittently and moving or travelling continuously. Therefore, the fluidized state is not limited to a fluidized state utilizing a fluidized layer in which particles are exercised by supplying gas into the powder layer. The method for fluidizing in the present invention can be a method which is conventionally used in a powder reaction device and methods used in a mixing device, stirring device, combustion device, drying device, grinding device or granulating device may be applied. More specifically, a rotating vessel device of a horizontal cylinder type, V type, bi-conical type or oscillating rotating type or a mechanical stirring device of a monoaxial ribbon type, pluriaxial paddle type, rotating spade type, biaxial planetary stirrer type or conical screw type may be used. The specific shape of these devices can be found in the Chemical Engineering Manual (edited by the Society of Chemical Engineers, Japan, 6th edition, page 876).

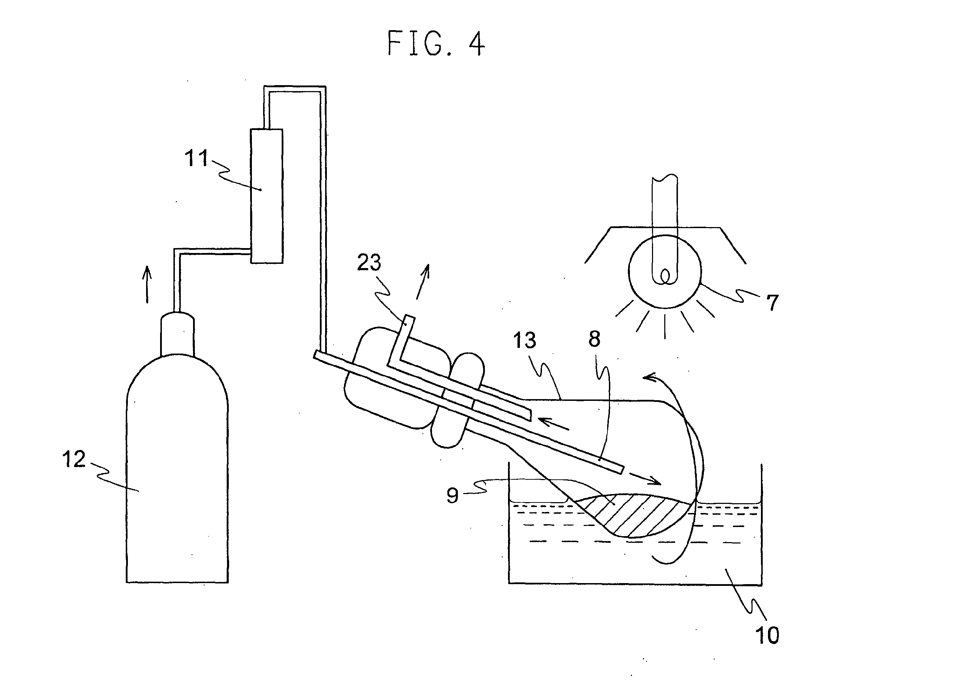

Of these devices, the rotating vessel type device shown in Fig. 4 to 7 can definitely fluidize all the powder particles and evenly expose the particles to the powder layer surface and is therefore preferably used in the present invention. The rotation speed of the rotating vessel type device is preferably 1 to 100 rpm. When the rotation speed is slower than 1 rpm, mixing tends to become insufficient and when the rotation speed is faster than 100 rpm, the particles tend to fly in all directions.

As the method for exposing light in the present invention, any method can be used as long as the light source is outside the powder layer and the surface of the powder layer is exposed by light. As shown in Fig. 4, light source 7 may be placed outside transparent reaction vessel 13 made, for example, of glass. Also, light may be directed into the reaction vessel from a light source located outside the reaction vessel using fiber optics, a reflector or prism.

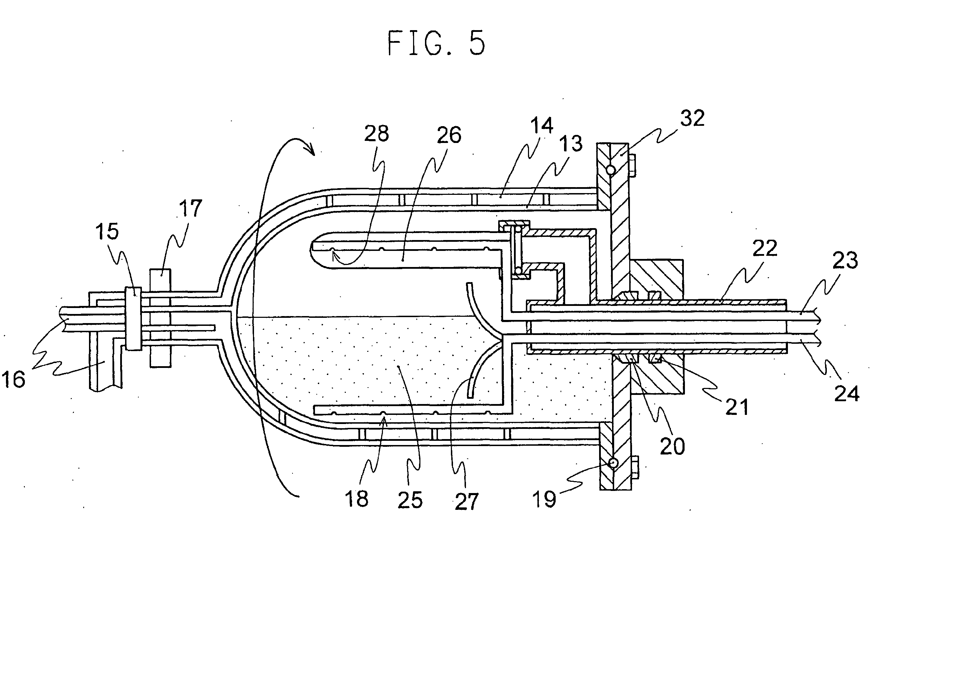

In this way, by the method of placing a light source outside the reaction vessel, the heat from the light source which is introduced into the reaction vessel can be kept to a minimum. Also, light source 26 can be installed inside reaction vessel 13 as shown in Fig. 5 to 7. When preparing a large-scale reaction vessel, the method of installing the light source inside 'the reaction vessel as shown in Fig. 5 to 7 is preferable as light can be used efficiently. Light source 26 must be located outside powder layer 25 and is specifically located 3 to 100 cm outside the powder layer. When the light source is closer than 3 cm, the light may not be evenly exposed to the surface of the powder layer and when the light source is farther than 100 cm, the light tends to become decayed.

The type of light source used in the present invention is described below. The role of light in the present invention is to excite chlorine to produce chlorine radicals and advance the chlorine addition reaction of vinyl chloride resin. Chlorine has an energy absorption band in a wide range of wavelengths from a visible range to UV rays and so in the present invention, various light sources such as sunlight and artificial light may be used. Chlorine has the strongest absorption band to UV rays having a wavelength of 320 to 360 nm and a light source largely including this wavelength range is preferably used. Examples of a light source giving off a great deal of UV rays are a low pressure mercury lamp, high pressure mercury lamp, ultra-high pressure mercury lamp and metal halide lamp. The light source may be covered with a transparent cover depending on the purpose such as protecting the light source and cooling. In such a case, the material of the transparent cover may be quartz, PYREX®, hard glass or soft glass. However, in order to effectively utilize wavelength of ultraviolet region effective for chlorination reaction, quartz or PYREX® is preferably used and using quartz is most preferable.

The apparatus for conducting the process of the present invention is described below.

Fig. 4 depicts a rotating preparation apparatus in which the light source is located outside the reaction vessel. Pear shaped flask 13 made of PYREX® having a 1,000 ml capacity, which is the rotary reactor, is charged with vinyl chloride resin. Next, pear shaped flask 13 made of PYREX® charged with vinyl chloride resin is immersed in constant temperature bath 10. Then, after nitrogen gas is passed through, chlorine is supplied from chlorine cylinder 12 via gas flowmeter 11 through chlorine gas supply port 8 into pear shaped flask 13 made of PYREX® . Pear shaped flask 13 made of PYREX® is rotated in the constant temperature bath to fluidize powder layer 9. UV rays are exposed to the surface of powder layer 9 using high pressure mercury lamp 7 located outside powder layer 9. The reaction is initiated when mercury lamp 7 is lighted and a mixed gas of chlorine and hydrogen chloride is discharged from gas vent 23. Also, a thermocouple is inserted into powder layer 9 and the temperature of powder layer 9 is measured. After a certain time has passed, mercury lamp 7 is turned off to finish the reaction. After the reaction is finished, nitrogen gas is passed through reaction vessel 13 to replace the chlorine gas.

Another embodiment of a rotary reactor in which the light source is located inside the reaction vessel is described referring to Fig. 5. Non-rotating pipe 22 having light source 26, chlorine gas supplying nozzle 24, gas-discharging nozzle 23 and thermocouple 27 is inserted to the rotational axis of rotating reaction vessel 13. Reaction vessel 13 is then sealed by lid 32 via O-ring 19. Chlorine gas passes through chlorine gas supplying nozzle 24 and then supplied into rotating reaction vessel 13. Chlorine gas supply port 18 is located within the powder layer and the opening of gas supply port 18 faces downward. The chlorination reaction progresses within rotating reaction vessel 13 by light exposed from light source 26 located outside powder layer 25. Hydrogen chloride gas which is produced by the chlorination reaction is removed from gas vent 28 located above powder layer 25. The removed hydrogen chloride gas is discharged from rotating reaction vessel 13 through gas-discharging nozzle 23. Powder layer 25 becomes fluidized by rotating reaction vessel 13 and jacket 14 around the rotational axis. Chlorine gas is dispersed all over powder layer 25 and light exposed from light source 26 is evenly exposed all over powder layer 25. The temperature of powder layer 25 during the chlorination reaction is measured by thermocouple 27 and then adjusted to a temperature suitable for the chlorination reaction, by adjusting the temperature of the cooling medium or heating medium supplied into jacket 14.

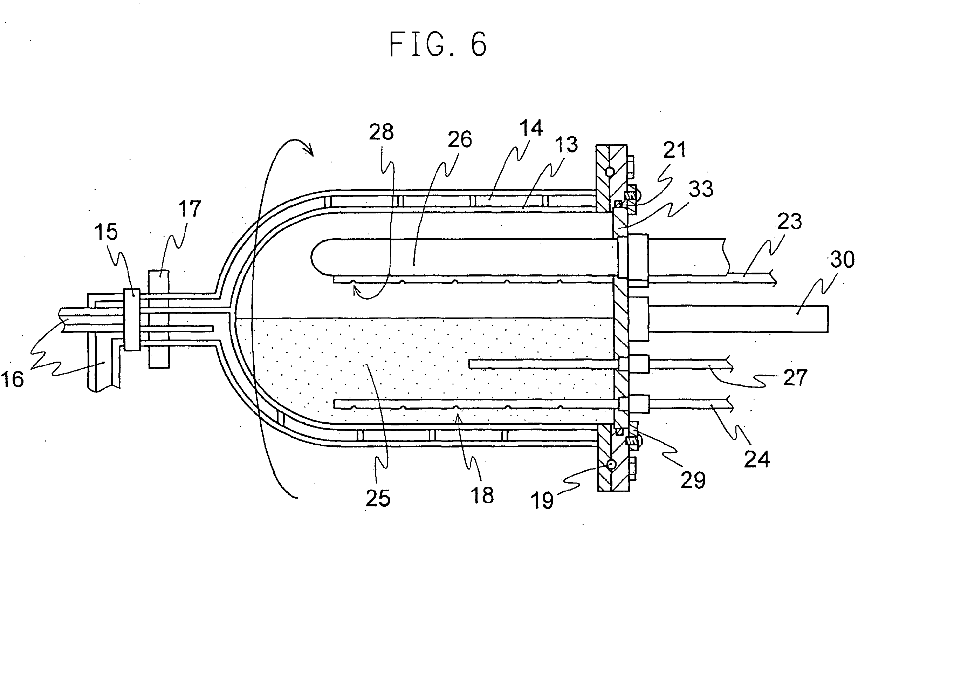

When rotating reaction vessel 13 and jacket 14 are rotated, leakage of toxic gas such as chlorine gas to the outside of rotating reaction vessel 13 and entrance of outside gas such as air into rotating reaction vessel 13 must be prevented. One method to satisfy this condition is to install cylindrical non-rotating pipe 22 equipped with the above components to be fixed on the rotational axis of rotating reaction vessel 13 and then install rotating gas seal 21 between non-rotating pipe 22 and rotating reaction vessel 13 or lid 32 which is fixed to rotating reaction vessel 13. Another method is to fix non-rotating plate 33 equipped with the above components to be fixed perpendicular to the rotational axis of rotating reaction vessel 13 and then install rotating gas seal 21 between non-rotating plate 33 and the reaction vessel as shown in Fig. 6. In these methods, powder particles may enter into the space of rotating gas seal 21 to cause gas leakage and so dust seal 20 is preferably installed inward to gas seal 21.

The chlorination reaction of vinyl chloride resin is an exothermic reaction so heat must be removed from powder layer 25. On the other hand, the powder layer 25 must be heated to approximately 40 to 60°C in order to start the reaction. Therefore, rotating reaction vessel 13 of the present invention is equipped with jacket 14 for a cooling medium or heating medium to run through and so a cooling medium or heating medium can be supplied or discharged even when rotating reaction vessel 13 is rotating. Commonly used substances such as water, steam or silicone oil may be used as the cooling medium and heating medium. Rotating reaction vessel 13 rotates along with jacket 14. Therefore, rotary joint 15 having a double pipe structure is installed on the rotational axis of rotating reaction vessel 13 via a rotational axis holding member 17 and a heating medium or cooling medium is run through the jacket. Also, rotary joint 15 is located opposite to non-rotating pipe 22 equipped with light source 26, chlorine gas supplying nozzle 24, gas-discharging nozzle 23 and thermocouple 27. Here, rotary joint 15 is a joint combining double pipe 16 and a rotating seal and by installing the rotary joint at one point on the rotational axis of rotating reaction vessel 13, a device in which fluid can simultaneously flow in and out is made possible. Examples of a specific product are RXE3015 or AC series made by Showa Kogyo KK.

Another embodiment of a rotary reactor in which the light source is located inside the reaction vessel is described referring to Fig. 6. The apparatus of Fig. 6 is the same as that of Fig. 5 except that light source 26, chlorine gas supplying nozzle 24, gas-discharging nozzle 23 and thermocouple 27 are installed on non-rotating disc 33 having support bar 30 located perpendicularly to the rotational axis of rotating reaction vessel 13, instead of non-rotating pipe 22 and that the reaction vessel is sealed by lid fixing ring 29.

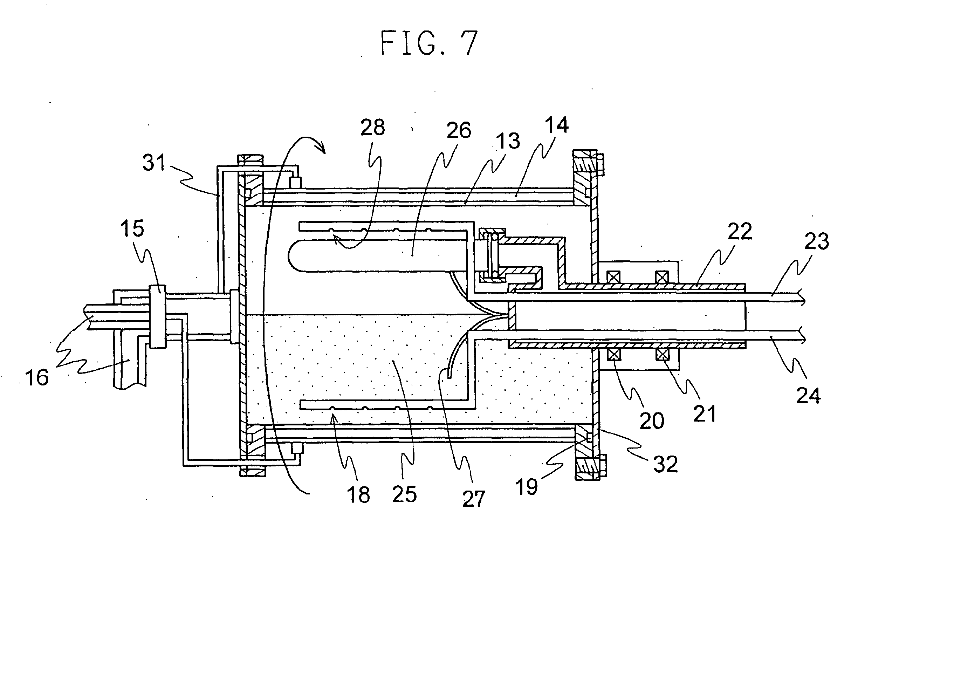

Another embodiment of a rotary reactor in which the light source is located inside the reaction vessel is described referring to Fig. 7. The apparatus of Fig. 7 is the same as that of Fig. 5 except that the cooling medium or heating medium is supplied into and discharged from jacket 14 from the rotary joint via cooling and heating medium flow pipe 31.

The present invention can be widely applied in light reaction of powder and gas. For example, if fluorine is used instead of chlorine, vinyl chloride resin can be fluorinated by light reaction. Also, resin other than vinyl chloride resin such as polypropylene, polyethylene polystyrene and polyisobuthylene can be chlorinated or fluorinated.

The inside and surface of the particles of chlorinated vinyl chloride resin obtained by the gas-solid contact chlorination method of the present invention contain unreacted chlorine or hydrogen chloride which is a reaction product. In order to industrially use the obtained vinyl chloride resin as a product, the chlorine and hydrogen chloride must be removed. Examples of the method for removing chlorine and hydrogen chloride are aeration washing in which post-chlorinated vinyl chloride resin is stirred or a fluidized layer of the resin is formed in a vessel in which gas such as nitrogen, air, argon or carbon dioxide has been supplied and vacuum degassing in which chlorine and hydrogen chloride are removed by conducting degassing in a vessel containing chlorinated vinyl chloride resin after post-chlorination. Also, aeration washing and vacuum degassing can both be used together. In order to enhance the hydrogen chloride removing effect, a rotating vessel device of a horizontal cylinder type, V type, bi-conical type or oscillating rotating type or a mechanical stirring device of a monoaxial ribbon type, pluriaxial paddle type, rotating spade type, biaxial planetary stirrer type or conical screw type may be used and the above gas can be supplied in the reaction vessel or degassing or aeration washing can be conducted. The specific shape of these devices can be found in the Chemical Engineering Manual (edited by the Society of Chemical Engineers, Japan, 6th edition, page 876). In order to omit the device for the hydrogen chloride removal step and reduce facility costs, the above gas can be supplied in the reaction vessel or degassing or aeration washing can be conducted after the gas-solid contact chlorination reaction is finished while the chlorinated vinyl chloride resin still in the reaction device. When conducting aeration washing, the gas is preferably supplied at a flow rate of 500 to 50,000 ml/minute for 10 to 120 minutes based on 1 kg of chlorinated vinyl chloride resin. When the flow rate is slower than 500 mi/minute, removal of hydrogen chloride tends to be insufficient and when the flow rate is faster than 50,000 ml/minute, the particles tend to fly in all directions and become difficult to handle. Also, when the supplying time is less than 10 minutes, removal of hydrogen chloride tends to be insufficient and even when the time is longer than 120 minutes, removal of hydrogen chloride does not progress any further. Degassing is' conducted so that the pressure within the reaction vessel becomes at most -0.08 MPa. When the pressure is higher than -0.08 MPa, removal of hydrogen chloride tends to be insufficient. The degassing time is preferably 5 to 60 minutes. When the time is less than 5 minutes, removal of hydrogen chloride tends to be insufficient and even when the time is longer than 60 minutes, removal of hydrogen chloride does not progress any further.

Next, the method for obtaining chlorinated vinyl chloride resin providing a molded article with little coloring is explained in detail through Examples below, but the present invention is not limited thereto.

EXAMPLE 1

A stainless-steel autoclave equipped with a stirring blade was charged with 400 parts by weight of ion exchanged water, 0.005 part by weight of polyethylene oxide having a number average molecular weight of 2,000,000, 0.04 part by weight of hydroxypropyl methyl cellulose and 0.05 part by weight of di-2-ethylhexylperoxy dicarbonate in isoparaffin in an amount of 70 %. After the autoclave was degassed, 100 parts by weight of vinyl chloride monomers were added. The value Y at this point was 0. Then, suspension polymerization was conducted while stirring and vinyl chloride resin having a polymerization degree of approximately 1,000 was obtained. The suspension of vinyl chloride resin was dehydrated and dried to obtain powder vinyl chloride resin which does not contain partially hydrolyzed poly (vinyl acetate). This resin was called vinyl chloride resin A. The average particle size of vinyl chloride resin A was 200 μm.

Using the apparatus shown in Fig. 4, vinyl chloride resin A was post-chlorinated by gas-solid contact chlorination reaction. A reaction vessel (pear shaped flask made of PYREX® having a 1,000 ml capacity) was filled with 187.50 g = 3 mole of powder of vinyl chloride resin A. While the reaction vessel was rotated immersed in a water bath of 30°C, nitrogen gas was supplied in the spatial area of the reaction vessel at a flow rate of 200 ml/minute for 60 minutes. Furthermore, chlorine gas was supplied at a flow rate of 200 ml/minute for 30 minutes. Then, the flow rate of chlorine gas was increased to 600 ml/minute and the surface of powder layer 9 was exposed with UV rays using 400 W high pressure mercury lamp 7 located 35 cm above powder layer 9. When mercury lamp 7 was turned on, the reaction was initiated and a mixed gas of chlorine and hydrogen chloride was discharged from the gas vent. The hydrogen chloride generated by the reaction was absorbed into water and from the neutralization titration value of the obtained hydrochloric acid, the amount generated of hydrogen chloride and the content of chlorine in the chlorinated vinyl chloride resin were continuously calculated. A thermocouple was inserted into powder layer 9 and the temperature was measured and 10 minutes later, the temperature of the powder layer had reached 51°C, because after mercury lamp 7 was lighted the reaction was initiated and heat was generated from the reaction. The reaction rate declines as the reaction progresses and when the chlorine content reached 61.4 % by weight, the temperature of the water bath was raised to 45°C and when the chlorine content reached 64.3 % by weight, the temperature of the water bath was raised to 60°C. When 180 minutes had passed, mercury lamp 7 was turned off and the reaction was finished.

After the reaction was finished, while maintaining the temperature of the reaction vessel at 60°C, nitrogen gas was supplied in the reaction vessel at a flow rate of 600 ml/minute to remove the remnant chlorine and hydrogen chloride. Chlorinated vinyl chloride resin after continuing nitrogen replacement for 100 minutes was called Sample 1.

EXAMPLE 2

Vinyl chloride resin A (powder vinyl chloride resin which does not contain partially hydrolyzed poly(vinyl acetate)) of Example 1 was post-chlorinated using the same reaction device as in Example 1. A reaction vessel (pear shaped flask made of PYREX® having a 1,000 ml capacity) was filled with 187.52 g = 3 mole of vinyl chloride resin A. While the reaction vessel was rotated immersed in a water bath of 60°C, nitrogen gas was supplied in the spatial area of the reaction vessel at a flow rate of 200 ml/minute for 60 minutes. Furthermore, chlorine gas was supplied at a flow rate of 200 ml/minute for 30 minutes. Then, the flow rate of chlorine gas was increased to 600 ml/minute and the surface of powder layer 9 was exposed with UV rays using 400 W high pressure mercury lamp 7 located 35 cm above powder layer 9. When mercury lamp 7 was turned on, the reaction was initiated and a mixed gas of chlorine and hydrogen chloride was discharged from the gas vent. A thermocouple was inserted into powder layer 9 and the temperature was measured and 10 minutes later, the temperature of the powder layer 9 had reached 78°C, because after mercury lamp 7 was lighted the reaction was initiated and heat was generated from the reaction. The reaction rate declines as the reaction progresses and so the temperature of the water bath was gradually raised and controlled so that the temperature of powder layer 9 became constant at approximately 80°C. When 150 minutes had passed, mercury lamp 7 was turned off and the reaction was finished.

After the reaction was finished, while maintaining the temperature of the reaction vessel at 60°C, nitrogen gas was supplied in the reaction vessel at a flow rate of 600 ml/minute to remove the remnant chlorine and hydrogen chloride. Chlorinated vinyl chloride resin after continuing nitrogen replacement for 100 minutes was called Sample 2.

EXAMPLE 3

Vinyl chloride resin A (powder vinyl chloride resin which does not contain partially hydrolyzed poly(vinyl acetate)) of Examples 1 and 2 was post-chlorinated using the same reaction device as in Examples 1 and 2. A reaction vessel (pear shaped flask made of PYREX® having a 1,000 ml capacity) was filled with 187.82 g = 3 mole of vinyl chloride resin A. While the reaction vessel was rotated immersed in a water bath of 60°C, nitrogen gas was supplied in the spatial area of the reaction vessel at a flow rate of 200 ml/minute for 60 minutes. Furthermore, chlorine gas was supplied at a flow rate of 200 ml/minute for 30 minutes. Then, the flow rate of chlorine gas was increased to 600 ml/ minute and the surface of powder layer 9 was exposed with UV rays using 400 W high pressure mercury lamp 7 located 35 cm above powder layer 9. When mercury lamp 7 was turned on, the reaction'was initiated and a mixed gas of chlorine and hydrogen chloride was discharged from the gas vent. A thermocouple was inserted into powder layer 9 and the temperature was measured and 10 minutes later, the temperature of the powder layer 9 had reached 81°C, because after mercury lamp 7 was lighted the reaction was initiated and heat was generated from the reaction. The reaction rate declines as the reaction progresses and so the temperature of the water bath was gradually raised and controlled so that the temperature of powder layer 9 became constant at approximately 80°C. When 155 minutes had passed, mercury lamp 7 was turned off and the reaction was finished.

After the reaction was finished, while maintaining the temperature of the reaction vessel at 60°C, the reaction vessel was degassed for 100 minutes using an aspirator to remove the remnant chlorine and hydrogen chloride. Chlorinated vinyl chloride resin obtained in this way was called Sample 3.

EXAMPLE 4

A stainless-steel autoclave equipped with a stirring blade was charged with 400 parts by weight of ion exchanged water; 0.09 part by weight of polyethylene oxide having a number average molecular weight of 2,000,000, 0.02 part by weight of partially hydrolyzed poly(vinyl acetate) having a hydrolyzation degree of 80 % and 0.05 part by weight of di-2-ethylhexylperoxy dicarbonate in isoparaffin in an amount of 70 %. After the autoclave was degassed, 100 parts by weight of vinyl chloride monomers were added. The value Y of Example 4 at this point was 0.004. Then, suspension polymerization was conducted while stirring and vinyl chloride resin having a polymerization degree of approximately 1,000 was obtained. The suspension of vinyl chloride resin was dehydrated and dried to obtain powder vinyl chloride resin B. The average particle size of vinyl chloride resin B was 200 μm.

Using the apparatus of Examples 1 to 3, vinyl chloride resin B was post-chlorinated. A reaction vessel (pear shaped flask made of PYREX® having a 1,000 ml capacity) was filled with 187.87 g = 3 mole of powder of vinyl chloride resin B. While the reaction vessel was rotated immersed in a water bath of 30°C, nitrogen gas was supplied in the spatial area of the reaction vessel at a flow rate of 200 ml/minute for 60 minutes. Furthermore, chlorine gas was supplied at a flow rate of 200 ml/minute for 30 minutes. Then, the flow rate of chlorine gas was increased to 600 ml/minute and the surface of powder layer 9 was exposed with UV rays using 400 W high pressure mercury lamp 7 located 35 cm above powder layer 9. When mercury lamp 7 was turned on, the reaction was initiated and a mixed gas of chlorine and hydrogen chloride was discharged from the gas vent. A thermocouple was inserted into powder layer 9 and the temperature was measured and 10 minutes later, the temperature of the powder layer had reached 53°C, because after mercury lamp 7 was lighted the reaction was initiated and heat was generated from the reaction. The reaction rate declines as the reaction progresses and when the chlorine content reached 61.4 % by weight, the temperature of the water bath was raised to 45°C and when the chlorine content reached 64.3 % by weight, the temperature of the water bath was raised to 60°C. When 175 minutes had passed, mercury lamp 7 was turned off and the reaction was finished.

After the reaction was finished, while maintaining the temperature of the reaction vessel at 60°C, nitrogen gas was supplied in the reaction vessel at a flow rate of 600 ml/minute to remove the remnant chlorine and hydrogen chloride. Chlorinated vinyl chloride resin after continuing nitrogen replacement for 100 minutes was called Sample 4.


COMPARATIVE EXAMPLE 1

A stainless-steel autoclave equipped with a stirring blade was charged with 400 parts by weight of ion exchanged water, 0.005 part by weight of polyethylene oxide having a number average molecular weight of 2,000,000, 0.05 part by weight of partially hydrolyzed poly(vinyl acetate) having a hydrolyzation degree of 80 % and 0.05 part by weight of di-2-ethylhexylperoxy dicarbonate in isoparaffin in an amount of 70 %. After the autoclave was degassed, 100 parts by weight of vinyl chloride monomers were added. The value Y of Comparative Example 1 at this point was 0.01. Then, suspension polymerization was conducted while stirring and vinyl chloride resin having a polymerization degree of approximately 1,000 was obtained. The suspension of vinyl chloride resin was dehydrated and dried to obtain powder vinyl chloride resin C containing partially hydrolyzed poly(vinyl acetate). The average particle size of vinyl chloride resin C was 200 μm.

Using the apparatus of Examples 1 to 4, vinyl chloride resin C was post-chlorinated. A reaction vessel (pear shaped flask 13 made of PYREX® having a 1,000 ml capacity) was filled with 187.87 g = 3 mole of powder of vinyl chloride resin C. While the reaction vessel was rotated immersed in a water bath of 30°C, nitrogen gas was supplied in the spatial area of the reaction vessel at a flow rate of 200 ml/minute for 60 minutes. Furthermore, chlorine gas was supplied at a flow rate of 200 ml/minute for 30 minutes. Then, the flow rate of chlorine gas was increased to 600 ml/minute and the surface of powder layer 9 was exposed with UV rays using 400 W high pressure mercury lamp 7 located 35 cm above powder layer 9. When mercury lamp 7 was turned on, the reaction was initiated and a mixed gas of chlorine and hydrogen chloride was discharged from the gas vent. A thermocouple was inserted into powder layer 9 and the temperature was measured and 10 minutes later, the temperature of the powder layer 9 had reached 53°C, because after mercury lamp 7 was lighted the reaction was initiated and heat was generated from the reaction. The reaction rate declines as the reaction progresses and when the chlorine content reached 61.4 % by weight, the temperature of the water bath was raised to 45°C and when the chlorine content reached 64.3 % by weight, the temperature of the water bath was raised to 60°C. When 180 minutes had passed, mercury lamp 7 was turned off and the reaction was finished.

After the reaction was finished, while maintaining the temperature of the reaction vessel at 60°C, nitrogen gas was supplied in the reaction vessel at a flow rate of 600 ml/minute to remove the remnant chlorine and hydrogen chloride. Chlorinated vinyl chloride resin after continuing nitrogen replacement for 100 minutes was called Comparative Sample 1.

The final chlorine content of Samples 1 to 4 and Comparative Sample 1' was calculated from the difference in weight before and after the reaction. That is, the final chlorine content was calculated assuming that the chlorine content of vinyl chloride resin was 56.8 % by weight and the difference in weight of the powder resin before and after the reaction was caused by hydrogen within the vinyl chloride resin replaced with chlorine. The final chlorine content of Comparative Sample 1 was calculated by conducting neutralization titration of the suspension after the reaction. That is, chlorine content was calculated on the assumption that all the hydrochloric acid calculated from the neutralization titration value was generated from the chlorination reaction of vinyl chloride resin indicated in the above formula.

The method for evaluating the coloring properties of the molded article made by each Sample is described below. 10 parts by weight of MBS (B31 available from Kaneka Corporation), 2 parts by weight of a tin stabilizer and 1.7 part by weight of a lubricant were compounded to 100 parts by weight of the Sample. The mixture was kneaded by an 8-inch roll at 195°C for 3 minutes. The obtained sheet was pressed at 200°C for 10 minutes to obtain a specimen. The color of the surface of the obtained specimen was measured using a color-difference meter (CR-200, made by Minolta Co., Ltd.) to obtain the L value and the coloring properties of a molded article were evaluated. The L value indicates the proportion of reflected light from the specimen to the incident light and the larger the L value, the lighter the coloring of the specimen and the smaller the L value, the darker the coloring of the specimen. However, the color of the specimen may change by the slightest change in processing temperature or pressure. Therefore, with the L value = $L_0$ of the specimen of Comparative Sample 1, which was obtained by pressing in the same pressing machine at the same time as each of the other Samples as the basis, the coloring properties of the molded article were evaluated by value K of the following equation (2). The coloring of the molded article decreases and good coloring properties are demonstrated as the value K becomes larger.

$$K = L/L_0 \tag{2}$$

The amount of remnant hydrogen chloride within each Sample was calculated by neutralization titration. After precisely weighing and dissolving into tetrahydrofuran, each Sample was extracted by a mixture of methanol and water and the amount of hydrochloric acid in the extracted solution was found by neutralization titration. The amount of hydrochloric acid in each Sample was calculated from the difference between the neutralization titration value of each Sample and the neutralization titration value of the mixture only.

The results of Examples 1 to 4 and Comparative Example 1 are shown in Table 1. From the results of Table 1, the chlorinated vinyl chloride resin of Examples 1 to 4, obtained by post-chlorinating vinyl chloride resin having a Y value of 0.004 or less with the gas-solid contact chlorination method, all have a high value K. In contrast, the chlorinated vinyl chloride resin of Comparative Example 1, obtained by post-chlorinating vinyl chloride resin having a Y value of greater than 0.004 with the gas-solid contact chlorination method, has a low value K and coloring of the molded article is strong.

TABLE 1

| | Polymerization Conditions | | | | Post-Chlorination Method | HCl Removal Method | Chlorine Content (%) | K Value (-) | Amount of Remnant HCl (ppm) |
|---|---|---|---|---|---|---|---|---|---|
| | Amount of Suspension Agent (part by weight) | | | Y value | | | | | |
| | PVAC | MC | PEO | | | | | | |
| Ex. 1 | 0 | 0.04 | 0.005 | 0 | Gas-Solid Contact Chlorination | Aeration Washing | 66.8 | 1.07 | 89 |
| Ex. 2 | 0 | 0.04 | 0.005 | 0 | Gas-Solid Contact Chlorination | Aeration Washing | 67.7 | 0.96 | 95 |
| Ex. 3 | 0 | 0.04 | 0.005 | 0 | Gas-Solid Contact Chlorination | Degassing | 68.0 | 0.98 | 90 |
| Ex. 4 | 0.02 | 0 | 0.09 | 0.004 | Gas-Solid Contact Chlorination | Aeration Washing | 66.9 | 0.98 | 82 |
| Com. Ex. 1 | 0.05 | 0 | 0.005 | 0.01 | Gas-Solid Contact Chlorination | Aeration Washing | 66.9 | 0.76 | 97 |

PVAC represents partially hydrolyzed poly(vinyl acetate)(hydrolyzation degree 80%).

MC represents hydroxypropyl methyl cellulose.

PEO represents polyethylene oxide.

EXAMPLE 5

The reaction was conducted using the apparatus of Fig. 4. A reaction vessel (pear shaped flask made of PYREX® having a 1,000 ml capacity) was filled with 187.78 g = 3 mole of powder of vinyl chloride resin having a polymerization degree of 1,000 (S1001M, available from Kaneka Corporation). The vinyl chloride resin was synthesized by suspension polymerization and had an average particle size of 210 µm measured by JIS-28801 and a particle size distribution shown in Table 2. While the reaction vessel was immersed in constant temperature bath 10 of 60°C, nitrogen gas was supplied in the spatial area of the reaction vessel at a flow rate of 200 ml/minute for 60 minutes. Furthermore, chlorine gas was supplied at a flow rate of 200 ml/minute for 30 minutes. Then, the flow rate of chlorine gas was increased to 600 ml/minute and the surface of powder layer 9 was exposed with UV rays using 400 W high pressure mercury lamp 7 located 35 cm above powder layer 9. When mercury lamp 7 was turned on, the reaction was initiated and a mixed gas of chlorine and hydrogen chloride was discharged from the gas vent. A thermocouple was inserted into powder layer 9 and the temperature was measured and 5 minutes later, the temperature of the powder layer 9 had reached 80°C, because after mercury lamp 7 was lighted the reaction was initiated and heat was generated from the reaction. The reaction rate declines as the reaction progresses and so the temperature of powder layer 9 gradually decreased and became approximately 63°C after continuing the reaction for 200 minutes. When 180 minutes had passed, mercury lamp 7 was turned off and the reaction was finished. After the reaction was finished, nitrogen gas was supplied in the reaction vessel at a flow rate of 600 ml/minute to replace the chlorine gas. Chlorinated vinyl chloride resin after continuing nitrogen replacement for 100 minutes was called Sample 5.

TABLE 2

| Particle Size (Mesh) | Particle Size (µm) | Proportion of Powder (% by weight) |
|---|---|---|
| 42 ON | 355 ON | 1 |
| 60 ON | 250 ON | 30 |
| 100 ON | 150 ON | 61 |
| 145 ON | 106 ON | 5 |
| 200 ON | 75 ON | 1 |
| 200 PASS | 75 PASS | 2 |

The final chlorine content of Sample 5 was calculated from the difference in weight before and after the reaction. That is, the final chlorine content was calculated assuming that the chlorine content of vinyl chloride resin was 56.8 % by weight and the difference in weight of the powder resin before and after the reaction was caused by hydrogen within the vinyl chloride resin replaced by chlorine. As a result, the weight of Sample 5 had increased from 187.78 g before the reaction to 244.40 g after the reaction and the chlorine content was calculated to be 67.5 % by weight.

The amount of remnant hydrogen chloride of Sample 5 was calculated by conducting neutralization titration. After precisely weighing and dissolving into tetrahydrofuran, Sample was extracted by a mixture of methanol and water and the amount of hydrochloric acid in the extracted solution was found by neutralization titration. The amount of hydrochloric acid in Sample 5 was calculated from the difference between the neutralization titration value of Sample 5 and the neutralization titration value of the mixture only. As a result, the amount of remnant hydrogen chloride was 87 ppm.

The glass transition temperature of Sample 5 was measured by a method according to JIS-K7121. As a result, the glass transition temperature of Sample 5 was 133°C.

10 parts by weight of MBS (B31, available from Kaneka Corporation), 2 parts by weight of a tin stabilizer and 1.7 part by weight of a lubricant were compounded to 100 parts by weight of Sample 5. The mixture was kneaded by an 8-inch roll at 195°C for 3 minutes. The obtained sheet was pressed at 200°C for 10 minutes to obtain a specimen. The Vicat softening temperature of the specimen measured according to JIS-K7206 was 113.4°C.

The thermal stability of Sample 5 was measured by the gear oven method. 10 parts by weight of MBS (B31, available from Kaneka Corporation), 2 parts by weight of a tin stabilizer and 1.7 part by weight of a lubricant were compounded to 100 parts by weight of Sample 5. The mixture was kneaded by an 8-inch roll at 195°C for 3 minutes. The obtained sheet was pressed at 200°C for 10 minutes and cut into a square of 1 cm to obtain a specimen. The specimen was heated in a gear oven of 200°C and taken out every 10 minutes to visually determine the blackening time of the specimen. As a result, the specimen blackened in 60 to 70 minutes. This evaluation method demonstrates that the longer the blackening time is, the more favorable the thermal stability becomes.

EXAMPLE 6

The reaction was conducted using the vinyl chloride resin of Example 5 (obtained by suspension polymerization) and the apparatus of Fig. 4. A reaction vessel (pear shaped flask made of PYREX® having a 1000 ml capacity) was filled with 187.70 g = 3 mole of powder of vinyl chloride resin. While the reaction vessel was immersed in constant temperature bath 10 of 50°C, nitrogen gas was supplied in the spatial area of the reaction vessel at a flow rate of 200 ml/minute for 60 minutes. Furthermore, chlorine gas was supplied at a flow rate of 200 ml/minute for 30 minutes. Then, the flow rate of chlorine gas was increased to 600 ml/minute and the surface of powder layer 9 was exposed with UV rays using 400 W high pressure mercury lamp 7 located 35 cm above powder layer 9. When 350 minutes had passed, mercury lamp 7 was turned off and the reaction was finished. After the reaction was finished, nitrogen gas was supplied in the reaction. vessel at a flow rate of 600 ml/minute to replace the chlorine gas. Chlorinated vinyl chloride resin after continuing nitrogen replacement for 100 minutes was called Sample 6.
The chlorine content, amount of remnant hydrogen chloride, glass transition temperature, Vicat softening temperature and blackening time of Sample 6 were measured in the same manner as in Example 5. As a result, the chlorine content was 67.2 % by weight, the amount of remnant hydrogen chloride was 82 ppm, the glass trarisition temperature was 132°C, the Vicat softening temperature was 113.3°C and the blackening time was 70 minutes.

EXAMPLE 7

The reaction was conducted using the vinyl chloride resin of Example 5 (obtained by suspension polymerization) and the apparatus of Fig. 4. A reaction vessel (pear shaped flask made of PYREX® having a 1000 ml capacity) was filled with 187.82 g = 3 mole of powder of vinyl chloride resin. While the reaction vessel was immersed in constant temperature bath 10 of 60°C, nitrogen gas was supplied in the spatial area of the reaction vessel at a flow rate of 200 ml/minute for 60 minutes. Furthermore, chlorine gas was supplied at a flowrate of 200 ml/minute for 30 minutes. Then, the flow rate of chlorine gas was increased to 600 ml/minute and the surface of powder layer 9 was exposed with UV rays using 400 W high pressure mercury lamp 7 located 35 cm above powder layer 9. A thermocouple was inserted into powder layer 9 and the temperature was measured and 5 minutes later, the temperature of the powder layer had reached 80°C, because after mercury lamp 7 was lighted the reaction was initiated and heat was generated from the reaction. Then, the temperature of the water bath was gradually raised and controlled so that the temperature of powder layer 9 became constant at approximately 80°C. When 155 minutes had passed, mercury lamp 7 was turned off and the reaction was finished. After the reaction was finished, nitrogen gas was supplied in the reaction vessel at a flow rate of 600 ml/minute to replace the chlorine gas. Chlorinated vinyl chloride resin after continuing nitrogen replacement for 100 minutes was called Sample 7.
The chlorine content, amount of remnant hydrogen chloride, glass transition temperature, Vicat softening temperature and blackening time of Sample 7 were measured in the same manner as in Example 5. As a result, the chlorine content was 67.9 % by weight, the amount of remnant hydrogen chloride was 89 ppm, the glass transition temperature was 136°C, the Vicat softening temperature was 113.6°C and the blackening time was 50 minutes.

COMPARATIVE EXAMPLE 2

A 50 L reaction vessel was charged with 15 kg of the vinyl chloride resin used in Examples 5 and 6 and 35 kg of water to obtain a water suspension. Two 450 W mercury lamps were inserted into the water suspension and degassing and nitrogen replacement was conducted. Chlorine gas was introduced while the water suspension was stirred by the stirring blade and the mercury lamps were turned on to initiate the reaction. The temperature at which the reaction started was 50°C and linearly increased so that the reaction temperature after 1 hour became 85°C and the temperature was maintained. After the reaction was continued for a total of 100 minutes, supplying of chlorine was stopped and the mercury lamps were turned off to finish the reaction. Neutralization titration was conducted to the water suspension after reaction and the chlorine content measured from the amount of hydrogen chloride produced was 68.2 % by weight. The water suspension was filtered using filter paper and a Nutsche and the obtained cake was washed. Further, the washing liquid and the cake were separated by filtration. The obtained cake which was dried in a rack type dryer at 55°C for at least 24 hours was called Comparative Sample 2.
The amount of remnant hydrogen chloride, glass transition temperature, Vicat softening temperature and blackening time of Comparative Sample 2 were measured in the same manner as in Example 5. As a result, the amount of remnant hydrogen chloride was 85 ppm, the glass transition temperature was 137°C and the Vicat softening temperature was 113.8°C. Also, the blackening time measured by the gear oven test of Example 5 was 40 to 50 minutes.
The evaluation results of the Samples obtained by Examples 5 to 7 and Comparative Example 2 are shown in Table 3. The results of Table 3 indicate that regardless that chlorinated vinyl chloride resin synthesized by gas-solid contact chlorination of the present invention is subjected to only the simple after-treatment of supplying nitrogen for a short period of 100 minutes, the amount of remnant hydrogen chloride is equivalent to that of chlorinated vinyl chloride resin which has gone through complex after treatment such as dehydrating, washing with water and drying for at least 24 hours after synthesizing by water suspension chlorination. Also, the chlorinated vinyl chloride resin synthesized by gas-solid contact chlorination of the present invention has a glass transition temperature and Vicat softening temperature equivalent to those of chlorinated vinyl chloride resin obtained by water suspension chlorination and therefore has sufficient heat resistance. Further, the chlorinated vinyl chloride resin synthesized by gas-solid contact chlorination of the present invention has a longer blackening time by a gear oven test than chlorinated vinyl chloride resin obtained by water suspension chlorination and therefore has excellent thermal stability.

TABLE 3

| | Chlorine Content (% by weight) | Amount of Remnant Hydrogen Chloride (ppm) | Glass Transition Temperature (°C) | Vicat Softening temperature (°C) | Blackening Time (minutes) |
|---|---|---|---|---|---|
| Ex.5 | 67.5 | 87 | 133 | 113.4 | 60~70 |
| Ex. 6 | 67.2 | 82 | 132 | 113.3 | 70 |
| Ex. 7 | 67.9 | 89 | 136 | 113.6 | 50 |
| Com. Ex. 2 | 68.2 | 85 | 137 | 113.8 | 40~50 |

EXAMPLE 8

A stainless-steel autoclave was equipped with a stirring blade was charged with 400 parts by weight of ion exchanged water, 0.005 part by weight of polyethylene oxide having a number average molecular weight of 2,000,000, 0.04 part by weight of hydroxypropyl methyl cellulose and 0.05 part by weight of a isoparaffin solution of a 70 % concentration of di-2-ethylhexylperoxy dicarbonate. After the autoclave was degassed, 100 parts by weight of vinyl chloride monomers were added. Then, suspension polymerization was conducted while stirring and vinyl chloride resin having a polymerization degree of approximately 1000 was obtained. The suspension of vinyl chloride resin was dehydrated and dried to obtain vinyl chloride resin D.

Chlorination reaction was conducted using the apparatus shown in Fig. 7. A reaction vessel (made of Hastelloy C22 having a 10 L capacity) was filled with 750 g = 12 mole of powder of vinyl chloride resin D. The bulk density of vinyl chloride resin D was 0.5 g/cm$^3$ so powder layer 25 was filled to a position lower than the rotational axis of reaction vessel 13. Light source 26 was placed inside reaction vessel 13 and outside powder layer 25 (located outside powder layer 25 in the upper area of the vessel). Reaction vessel 13 was placed on top of two rubber rollers located parallel to the rotational axis of reaction vessel 13 and by rotating the rubber rollers, reaction vessel 13 was rotated in the direction of the arrow shown in Fig. 7. While running warm water of 40°C through jacket 14 of reaction vessel 13, nitrogen gas was supplied for 30 minutes at a flow rate of 5000 ml/minute from gas supply port 18 located inside powder layer 25 and then chlorine gas was supplied for 30 minutes at a flow rate of 2500 ml/minute. The surface of powder layer 25 was exposed with UV rays using a 100 W high pressure mercury lamp 26 located within reaction vessel 13. When mercury lamp 26 was turned on, the reaction was initiated and a mixed gas of chlorine and hydrogen chloride was discharged from gas vent 28. Thermocouple 27 was inserted into powder layer 25 and the temperature was measured and 10 minutes later, the temperature of powder layer 25 had reached 48°C, because after mercury lamp 26 was lighted the reaction was initiated and heat was generated from the reaction. Furthermore, the temperature of the warm water running through jacket 14 was raised to 60°C and after 60 minutes had passed, the temperature of powder layer 25 was approximately 80°C. The temperature of the warm water running through jacket 14 was adjusted and the chlorination reaction was continued maintaining the temperature of the powder layer at 80°C. When 220 minutes had passed from starting UV ray exposure, mercury lamp 26 was turned off and the reaction was finished. After the reaction was finished, nitrogen gas was supplied in reaction vessel 13 at a flow rate of 5000 ml/minute to replace the chlorine gas. Chlorinated vinyl chloride resin after continuing nitrogen replacement for 90 minutes was called Sample 8. Sample 8 was white fluidized powder.

The chlorine content of resin in the reaction process was calculated from the amount of hydrogen chloride contained in the reaction gas. That is, the mixed gas of chlorine and hydrogen chloride discharged from the gas vent was passed through 10 L of water and the amount of hydrogen chloride absorbed by water was found by conducting neutralization titration every 10 minutes. The small amount of chlorine dissolved in the hydrogen chloride absorbing solution affects the neutralization titration value so neutralization titration was conducted by adding an aqueous solution of potassium iodide and sodium thiosulfate in advance so that the chlorine does not affect the neutralization titration value. The chlorine content was calculated assuming that the chlorine content of vinyl chloride resin which is the starting resin was 56.8 % by weight and that hydrogen within the vinyl chloride resin was replaced by chlorine in an equimolar amount to the generated hydrogen chloride.

The Vicat softening temperature and blackening time of Sample 8 were measured in the same manner as in Example 5. As a result, the Vicat softening temperature was 113.5°C and the blackening time was 60 to 70 minutes.

EXAMPLE 9

Chlorination reaction was conducted using the vinyl chloride resin D of Example 8 and apparatus 13 shown in Fig. 7. Reaction vessel 13 (made of Hastelloy C22 having a 10 L capacity) was filled with 2500 g = 40 mole of powder of vinyl chloride resin D. The bulk density of vinyl chloride resin D was 0.5 g/cm$^3$ so powder layer 25 was filled exactly to the rotational axis of reaction vessel 13. Light source 26 was placed inside reaction vessel 13 and outside powder layer 25 (located outside powder layer 25 in the upper area of the vessel). Reaction vessel 13 was placed on top of two rubber rollers located parallel to the rotational axis of reaction vessel 13 and by rotating the rubber rollers, reaction vessel 13 was rotated in the direction of the arrow shown in Fig. 7. While running warm water of 40°C through jacket 14 of reaction vessel 13, nitrogen gas was supplied in the spatial area of reaction vessel 13 for 30 minutes at a flow rate of 5000 ml/minute and then chlorine gas was supplied for 30 minutes at a flow rate of 5000 ml/minute. The surface of powder layer 25 was exposed with UV rays using a 100 W high pressure mercury lamp 26 located within reaction vessel 13. When mercury lamp 26 was turned on, the reaction was initiated and a mixed gas of chlorine and hydrogen chloride was discharged from gas vent 28. Thermocouple 27 was inserted into powder layer 25 and the temperature was measured and 10 minutes later, the temperature of powder layer 25 had reached 55°C, because after mercury lamp 26 was lighted the reaction was initiated and heat was generated from the reaction. Furthermore, the temperature of the warm water running through jacket 14 was raised to 60°C and after 50 minutes had passed, the temperature of powder layer 25 was approximately 80°C. The temperature of the warm water running through jacket 14 was adjusted and the chlorination reaction was continued maintaining the temperature of powder layer 25 at 80°C. When 220 minutes had passed from starting UV ray exposure, mercury lamp 26 was turned off and the reaction was finished. After the reaction was finished, nitrogen gas was supplied in reaction vessel 13 at a flow rate of 5000 ml/minute to replace the chlorine gas. Chlorinated vinyl chloride resin after continuing nitrogen replacement for 90 minutes was called Sample 9. Sample 9 was white fluidized powder.

The chlorine content, Vicat softening temperature and blackening time of Sample 9 were measured in the same manner as in Example 5. As a result, the Vicat softening temperature was 113.4°C and the blackening time was 60 to 70 minutes.

COMPARATIVE EXAMPLE 3

Chlorination reaction was conducted using the vinyl chloride resin D of Example 8 and an apparatus in which fixed member supporting pipe 22, light source 26, chlorine gas supplying nozzle 24 and gas discharging nozzle 23 of apparatus 13 shown in Fig. 7 were installed upside down. In this case, light source 26 is located at a position lower than the rotational axis of reaction vessel 13 (in the lower part of the vessel, within powder layer 25). Reaction vessel 13 (made of Hastelloy C22 having a 10 L capacity) was filled with 2500 g = 40 mole of powder of vinyl chloride resin D. The bulk density of vinyl chloride resin D was 0.5 g/cm$^3$ so powder layer 25 was filled exactly to the rotational axis of reaction vessel 13. Light source 26 was placed inside reaction vessel 13 and also inside powder layer 25. Reaction vessel 13 was placed on top of two rubber rollers located parallel to the rotational axis of reaction vessel 13 and by rotating the rubber rollers, reaction vessel 13 was rotated in the direction of the arrow shown in Fig. 7. While running warm water of 40°C through jacket 14 of reaction vessel 13, nitrogen gas was supplied in the spatial area of reaction vessel 13 for 30 minutes at a flow rate of 5000 ml/minute and then chlorine gas was supplied for 30 minutes at a flow rate of 5000 ml/minute. The interior of powder layer 25 was exposed with UV rays using a 100 W high pressure mercury lamp 26 located within reaction vessel 13. When mercury lamp 26 was turned on, the reaction was initiated and a mixed gas of chlorine and hydrogen chloride was discharged from gas vent 28. Thermocouple 27 was inserted into powder layer 25 and the temperature was measured and 10 minutes later, the temperature of powder layer 25 had reached 56°C, because after mercury lamp 26 was lighted the reaction was initiated and heat was generated from the reaction. Furthermore, the temperature of the warm water running through jacket 14 was raised to 60°C and after 50 minutes from the start of the reaction, the temperature of powder layer 25 was approximately 80°C. After the reaction started, an attempt was made to adjust the temperature of powder layer 25 to approximately 80°C, but the change in temperature was sudden and adjusting the temperature was difficult. Further, as the temperature of the powder suddenly rose between 100 and 160 minutes after the reaction had started, the powder resin melted and reaction vessel 13 stopped rotating. The resin taken out after replacing the chlorine gas inside the reaction vessel with nitrogen gas was a bulk of approximately 15 cm in size and was fixed around light source 26 and so the apparatus was damaged.

The chlorine content of the chlorinated vinyl chloride resin and the transition in the temperature of the powder layer when the reaction of Examples 8, 9 and Comparative Example 3 were conducted is shown in Table 4. In Examples 8 and 9 in which the light source is located inside the reaction vessel and outside the powder layer, though the chlorine content increases, the reaction temperature was controlled to approximately 80°C and the reaction progressed smoothly. In contrast, in Comparative Example 3 in which the light source is located inside the reaction vessel and inside the powder layer, regardless of the fact that the chlorine content increases slowly, the temperature of the powder layer repeatedly increased and declined suddenly and the reaction was unstable. Furthermore, as a result of increase in temperature, the resin melted and the reaction apparatus was destroyed.

TABLE 4

| Time of UV Ray Exposure | Ex. 8 | | Ex. 9 | | Com. Ex. 3 | |
|---|---|---|---|---|---|---|
| | Chlorine Content (% by weight) | Temperature of Powder Layer (°C) | Chlorine Content (% by weight) | Temperature of Powder Layer (°C) | Chlorine Content (% by weight) | Temperature of Powder Layer (°C) |
| 0 | 56.8 | 40 | 56.8 | 40 | 56.8 | 40 |
| 10 | 57.2 | 48 | 57.1 | 55 | 57.1 | 56 |
| 20 | 57.5 | 51 | 57.8 | 70 | 57.5 | 67 |
| 30 | 57.7 | 55 | 58.8 | 78 | 58.1 | 70 |
| 40 | 58.1 | 69 | 59.7 | 80 | 58.4 | 76 |
| 50 | 59.1 | 73 | 60.3 | 78 | 58.9 | 80 |
| 60 | 60.3 | 77 | 61.0 | 80 | 59.3 | 71 |
| 70 | 61.2 | 80 | 61.7 | 80 | 59.9 | 90 |
| 80 | 62.1 | 80 | 62.2 | 78 | 60.3 | 83 |
| 90 | 62.9 | 80 | 62.7 | 78 | 61.0 | 80 |
| 100 | 63.5 | 81 | 63.2 | 78 | 61.7 | 160 |
| 120 | 64.6 | 80 | 63.9 | 81 | 62.1 | 88 |
| 140 | 65.2 | 82 | 64.5 | 80 | 62.5 | 91 |
| 160 | 65.8 | 81 | 65.0 | 79 | 62.7 | 130 |
| 180 | 66.4 | 81 | 65.4 | 79 | 62.9 | 80 |
| 200 | 66.7 | 80 | 65.6 | 79 | Discontinued due to Breakdown of Apparatus | |
| 220 | 66.9 | 80 | 66.0 | 79 | | |

INDUSTRIAL APPLICABILITY

By chlorinating vinyl chloride by exposing vinyl chloride resin powder in a fluidized state with light from a light source located outside the powder layer while supplying chlorine to the powder layer, chlorinated vinyl chloride resin from which hydrogen chloride can easily be removed and excellent in heat resistance and thermal stability can be prepared.

Also, by post-chlorinating vinyl chloride resin, obtained by conducting suspension polymerization of vinyl chloride monomers in the presence of an oil-soluble polymerization initiator, using as a suspension agent, a mixture of a certain amount or less of partially hydrolyzed poly(vinylacetate) and at least one type of suspension agent other than partially hydrolyzed poly(vinyl acetate) with chlorine in a gas-solid contacting field, chlorinated vinyl chloride resin from which hydrogen chloride can easily be removed and having little coloring as a molded article can be prepared.

**Claims**

1. A process for preparing chlorinated vinyl chloride resin which comprises:
   conducting post-chlorination reaction of vinyl chloride resin and chlorine in a gas-solid contacting field by exposing light to the surface of a powder layer of vinyl chloride resin from a light source located inside a rotary reactor and outside said powder layer, while supplying chlorine to said powder layer within said rotary reactor.

2. The process of Claim 1, wherein said light source is at least one member selected from the group consisting of a low pressure mercury lamp, high pressure mercury lamp, ultra-high pressure mercury lamp and metal halide lamp.

3. The process of Claim 1, wherein said chlorine is supplied at least within said powder layer.

4. A process for preparing chlorinated vinyl chloride resin which comprises:

   synthesizing vinyl chloride resin by suspension polymerization of a vinyl chloride monomer in the presence of an oil soluble polymerization initiator, using as a suspension agent at least one member selected from the group consisting of water-soluble cellulose ether and polyethylene oxide and
   conducting post-chlorination reaction of said vinyl chloride resin and chlorine in a gas-solid contacting field.

5. The process of Claim 4, wherein said suspension agent is added in an amount of 0.0065 to 2.2 parts by weight based on 100 parts by weight of said vinyl chloride monomer.

6. The process of Claim 4, wherein said water-soluble cellulose ether is at least one member selected from the group consisting of methyl cellulose, hydroxypropyl methyl cellulose, carboxymethyl cellulose, ethyl cellulose and hydroxyethylmethyl cellulose.

7. The process of Claim 4, wherein partially hydrolyzed poly(vinyl acetate) having a value Y represented by formula (I) of 0.0001 to 0.004 is used together as said suspension agent

$$Y = (1 - \alpha/100) \times M \qquad (1)$$

   (wherein $\alpha$ represents the hydrolyzation degree (% by mole) of partially hydrolyzed poly(vinyl acetate) and M represents the amount of partially hydrolyzed poly(vinyl acetate) added (parts by weight) based on 100 parts by weight of vinyl chloride monomer).

8. The process of Claim 4, wherein light is used in said post-chlorination reaction.

9. The process of Claim 4, wherein a light source of said light is at least one member selected from the group consisting of a low pressure mercury lamp, high pressure mercury lamp, ultra-high pressure mercury lamp and metal halide lamp.

10. The process of Claim 4, wherein said post-chlorination reaction of vinyl chloride resin and chlorine is conducted in a gas-solid contacting field by exposing light to the surface of a powder layer of vinyl chloride resin from a light source located inside a rotary reactor and outside said powder layer, while supplying chlorine to said powder layer within the rotary reactor.

11. The process of Claim 1, which further comprises conducting at least one treatment selected from the group consisting of vacuum degassing and aeration washing.

12. A chlorinated vinyl chloride resin prepared by the process of Claim 1.

13. An apparatus for preparing chlorinated vinyl chloride resin which comprises:

a means for supplying chlorine to a powder layer of vinyl chloride resin inside a rotary reactor and
a means for exposing light to the surface of said powder layer from a light source located inside a rotary reactor and outside said powder layer.

14. The apparatus of Claim 13, wherein said light source is at least one member selected from the group consisting of a low pressure mercury lamp, high pressure mercury lamp, ultra-high pressure mercury lamp and metal halide lamp.

15. The apparatus of Claim 13, wherein supply port of said means for supplying chlorine is located so that chlorine gas is released downward.

16. The apparatus of Claim 13, wherein said supply port is located at least within said powder layer.

17. The apparatus of Claim 13 which further comprises a means for discharging chlorine at a position outside said powder layer.

18. The apparatus of Claim 13 which further comprises a cylindrical non-rotating pipe which is inserted into a reaction vessel on the rotational axis of said reaction vessel, thereby sealing space between said non-rotating pipe and reaction vessel with a rotating gas seal,
wherein said non-rotating pipe has at least one member selected from the group consisting of a light source, chlorine gas supplying nozzle, gas-discharging nozzle and thermocouples on the area of inserted into said reaction vessel.

19. The apparatus of Claim 13 which further comprises a non-rotating disc located at the opening of a reaction vessel on a plane perpendicular to the rotational axis of said reaction vessel as a lid, thereby sealing space between said non-rotating disc and reaction vessel with a rotating gas seal,
wherein said non-rotating disc has at least one member selected from the group consisting of a light source, chlorine gas supplying nozzle, gas-discharging nozzle and thermocouples.

20. The apparatus of Claim 18 or 19 which further comprises a means for supplying a cooling medium or heating medium to a jacket via a rotary joint having a double pipe structure installed on the rotational axis of said reaction vessel and opposite to said non-rotating pipe and non-rotating disc.

FIG. 1(a)

34

$Cl_2$ $Cl_2$ $Cl_2$ $Cl_2$ $Cl_2$ $Cl_2$ $Cl_2$ $Cl_2$

FIG. 1(b)

34

$Cl_2$ $Cl_2$ $Cl_2$ $Cl_2$ $Cl_2$ $Cl_2$ $Cl_2$ $Cl_2$

FIG. 2(a)

FIG. 2(b)

FIG. 3(a)

FIG. 3(b)

# FIG. 4

EP 1 361 231 A1

# FIG. 5

EP 1 361 231 A1

# FIG. 6

EP 1 361 231 A1

# FIG. 7

EP 1 361 231 A1

## INTERNATIONAL SEARCH REPORT

International application No.

PCT/JP01/11249

A. CLASSIFICATION OF SUBJECT MATTER
Int.Cl⁷ C08F8/22

According to International Patent Classification (IPC) or to both national classification and IPC

B. FIELDS SEARCHED

Minimum documentation searched (classification system followed by classification symbols)
Int.Cl⁷ C08F8/22

Documentation searched other than minimum documentation to the extent that such documents are included in the fields searched

Electronic data base consulted during the international search (name of data base and, where practicable, search terms used)
WPI (L)

C. DOCUMENTS CONSIDERED TO BE RELEVANT

| Category* | Citation of document, with indication, where appropriate, of the relevant passages | Relevant to claim No. |
|---|---|---|
| Y | GB, 2085897, A (Chloe Chimie Tour Generale), 06 May, 1982 (06.05.82), Claims; page 2, lines 111 to 124 & JP 57-98507 A Claims; page 4, upper left column, lines 11 to 19 | 1-20 |
| Y | US, 3700632, A (Air Produkts and Chemicals, Inc.), 24 October, 1972 (24.10.72), Claims; Example 15 & JP 48-7995 A Claims; Example 15 | 1-20 |

☐ Further documents are listed in the continuation of Box C.　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 March, 2002 (29.03.02) | 09 April, 2002 (09.04.02) |

| Name and mailing address of the ISA/ Japanese Patent Office | Authorized officer |
|---|---|
| Facsimile No. | Telephone No. |

Form PCT/ISA/210 (second sheet) (July 1998)